# EUROPEAN PATENT SPECIFICATION

(11) **EP 4 505 026 B1**
(45) Date of publication and mention of the grant of the patent: **23.09.2026**
(21) Application number: 23717550.0
(22) Date of filing: 06.04.2023
(51) Int. Cl.: E04H 15/06, B60P 3/34, B60R 9/06

(54) **REAR MOUNT TENT**
HECKMONTAGE-ZELT
TENTE À MONTAGE ARRIÈRE

(30) Priority: 08.04.2022 EP 22167392
(43) Date of publication of application: 12.02.2025
(73) Proprietor: Thule Sweden AB, 335 04 Hillerstorp (SE)
(72) Inventor: FALK, Hannes, 523 40 Ulricehamn (SE); PETERSSON, Maja, 331 33 Värnamo (SE); VIKINGSDÓTTIR, Sigrún, 57034 Bruzaholm (SE); ALMA, Jord, 51997 Öxnevalla (SE); GISELSON, Mathias, 331 30 Värnamo (SE); POULSEN, Jonas, 33191 Värnamo (SE); HELMERSSON, Simon, 33137 Värnamo (SE); WEBERG, Ellen, 554 52 Jönköping (SE); TESKERA, Ivana, 217 44 Malmö (SE); MILOJEVIC, Sasa, 567 31 Vaggeryd (SE); ANDERSSON, Filip, 231 53 Trelleborg (SE); STRUDWICK, Thomas, 243 93 Höör (SE); ADNER, Johanna, 168 73 Bromma (SE); GÖHLIN, Victor, 554 74 Jönköping (SE); ARDMAR, David, 56436 Bankeryd (SE)
(74) Representative: Wallentin, Lars
(86) International application number: PCT/EP2023/059264
(87) International publication number: WO 2023/194579

(56) References cited:
- EP-A2- 0 127 428
- GB-A- 1 596 101
- US-A1- 2015 321 716
- US-B1- 6 179 368

## Description

### TECHNICAL FIELD

The present invention relates to vehicle mounted tents for camping and more specifically to a collapsible tent configured to be mounted to a vehicle and to related methods for mounting a collapsible tent to a vehicle and for transferring a collapsible tent from a raised position to a lowered position in relation to a vehicle.

### BACKGROUND OF THE INVENTION

Vehicle carried tents are a common and popular product which allows the camper to swiftly set camp where desired and transport the tent without having to use space inside of vehicle. In order for the tent to be able to be transported by the vehicle, it is generally collapsible into a compact form where it can be fitted to the vehicle such as on the roof or to the rear of the vehicle for instance on a tow ball or a hitch receiver thereof.

Some vehicle mounted tents allows erection of the tent while still being mounted to the vehicle. It is however often a complicated process which can be time consuming. It is a general desire from the manufacturers of such tents to provide a tent which facilitates erection thereof.

While vehicle carried tents often are collapsible, they are still often of considerably size and weight and may thus be difficult to handle when not mounted to the vehicle. Consequently, it is desired to provide a tent which facilitates handling thereof such as in terms of mounting and unmounting it to/from the vehicle.

A further aspect that manufacturers of vehicle mounted tents is constantly locking to improve is the effect that the tent has on the vehicle in terms of wind resistance and increased drag as this increases the use of energy, be it fuel or electricity, of the vehicle. As such, it is desired to provide a vehicle mounted tent providing reduced drag to the vehicle.

The document US6179368 B1relates to a modular fold-out camping unit so designed as to be carried largely by a vehicle's hitch receiver for transportation while independently supported to the ground with height adjustable legs while in use.

The document GB1596101A relates to a foldable tent which is supported by a towable truck.

### SUMMARY OF THE INVENTION

In view of the above, an object of the present invention is to provide an improved collapsible tent which alleviates at least one of the drawbacks of the prior art. For example, an object of the present invention is to provide a collapsible tent that can be transported by a vehicle with reduced induced drag compared to prior art tents. Further, it is an object of the teachings herein to provide a collapsible tent that is easy to erect. Moreover, an object of the present disclosure is to provide a collapsible tent that is easy to mount to a vehicle and easy and safe to handle for the user.

The objects are achieved by the subject-matter of independent claim 1 and other aspects disclosed herein. Advantageous embodiments may be found in the dependent claims and in the accompanying description and drawings.

In a first aspect a collapsible tent according to appended claim 1 is provided.

As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the third base section and towards the third base section, or in the opposite proximal to distal direction.

The collapsible tent may further comprise a coupling arrangement being pivotable in relation to the foldable base, the coupling arrangement being configured for connection and/or release of the collapsible tent to and/or from the vehicle by a pivoting movement of the coupling arrangement in relation to at least one of the base sections. The connection and/or release of the collapsible tent to and/or from the vehicle by means of a pivotable coupling arrangement greatly reduces the strain on the user when handling the tent during connection and disconnection thereof to/from the vehicle. The user does not have to maneuver the vehicle in close proximity to the coupling arrangement as it can be pivoted for connection to the vehicle after the vehicle is correctly position, without having to lift the entire collapsible tent.

The collapsible tent may further comprise an angle section being arranged proximally of the third base section of the foldable base in relation to the coupling arrangement, the third base section defining a base plane of the foldable base when the collapsible tent is in the use state and wherein the angle section being arranged at an angle in relation to the third base section. The angle section may thus form a headrest when the collapsible tent is in the use state and serve as a secure separation between the inside of the collapsible tent at the head portion thereof and the outside. The angle section may further form a stop for the folding of the base sections as it limits the movement of the base sections in the proximal direction and further as a means for securing for instance the canopy of the collapsible tent in the space formed between the base sections.

The collapsible tent may further comprise a foldable frame being foldable with the folding of the foldable base, wherein the collapsible tent comprises a frame tensioning arrangement configured to erect at least a proximal frame member when the collapsible tent is in the use state.

The frame tensioning arrangement may comprise an elongate tensioning member connected between the angle section and at least a proximal frame member, thus facilitating the erection of the proximal frame member. Moreover, the angle section provides an elevated mounting position of the end of the elongate tensioning member in relation to the third base section, which improves the angular relationship for the force provided thereby to the proximal frame member such that it pulls the proximal frame member with more proximally directed force.

A base pivot axis around which at least one of the at least two sections of the foldable base folds may be arranged at an angle in relation to a longitudinal direction of the collapsible tent.

A coupling arrangement pivot axis around which the coupling arrangement pivots may be essentially parallel with the foldable base pivot axis.

The coupling arrangement may comprise a connector configured to connect the coupling arrangement to the vehicle, in a pivoting movement of the coupling arrangement and such that the relative orientation of the coupling arrangement and the vehicle is fixed. The rear mounting of the collapsible tent provides a reduction of the drag created by the collapsible tent on the vehicle, reducing the fuel/energy consumption thereof.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

The collapsible tent may further comprise at least one support for supporting the collapsible tent against a support surface, the at least one support being moveable between a raised and an extended position and wherein a first support portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

In a second aspect is a collapsible tent provided being configured to be mounted to a vehicle, preferably to a rear thereof. The collapsible tent being foldable between a use state and a collapsed state. The collapsible tent comprising:
a foldable base for forming a floor of the tent, the foldable base comprises at least two base sections being pivotable in relation to each other between the use state and the collapsed state,
a coupling arrangement being pivotable in relation to at least one of the base sections of the foldable base. The coupling arrangement being configured for connection and/or release of the collapsible tent to and/or from the vehicle by a pivoting movement of the coupling arrangement in relation to at least one of the base sections. The foldable base facilitates that the collapsible tent can be made compact in the collapsed state, reducing the impact of the collapsible tent on the aerodynamic efficiency of the vehicle. Moreover, the collapsible tent can be mounted on the rear of the vehicle, for instance to a tow ball thereof or to a hitch receiver, without protruding over the car. Additionally, the connection of the collapsible tent to the vehicle by means of a pivotable coupling arrangement greatly reduces the strain on the user when handling the tent during connection and disconnection thereof to/from the vehicle.

The coupling arrangement may be configured to be pivotable between a stowed position and an extended position when the collapsible tent is in the use state to allow connection to and release from the vehicle. The collapsible tent may thus not have to be moved in order to connect it to the vehicle when it is in the use state, facilitating handling of the collapsible tent. The user may simply arrange the vehicle in the correct position near the side of the collapsible tent with the coupling arrangement and subsequently pivot the coupling arrangement until it connects to the vehicle. The coupling arrangement further reduces the risk of that the user hits the collapsible tent with the vehicle, as the coupling arrangement may be in the raised position when the user positions the vehicle near the collapsible tent.

The collapsible tent may comprise a locking mechanism for locking the coupling arrangement in a stowed position in relation to the foldable base. The coupling arrangement may thus be locked in the stowed position in relation to the foldable base and vice versa, facilitating handling of the collapsible tent. The coupling arrangement may for instance be locked in the stowed position when the collapsible tent is in the use state, reducing the risk of it being in the way of access around the tent. Moreover, the collapsible tent can by means of the same locking mechanism be locked in a raised position, with the coupling arrangement in the stowed position, when mounted on the vehicle.

A coupling arrangement pivot axis around which the coupling arrangement pivots may be essentially parallel with a base pivot axis around which at least one of the at least two base sections of the foldable base folds.

A first base section of the foldable base is configured to be arranged distally of a second base section and a third base section of the foldable base in relation to the coupling arrangement when the collapsible tent is in the use state and wherein the first base section is configured to be arranged intermediately of the second base section and the third base section when the collapsible tent is in the collapsed state. As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the coupling arrangement and towards the coupling arrangement, or in the opposite proximal to distal direction.

The second base section may be arranged intermediately of the first base section and the third base section when the collapsible tent is in the use state.

The second base section and third base section may be connected such that they in the collapsed state are configured to be arranged essentially parallelly and spaced apart such that a space is formed between the second base section and the third base section which is configured to hold at least the first base section and a tent canopy. The space between the second and third base section facilitates transportation of the items associated with the collapsible tent, such as a canopy and/or a foldable frame for supporting the canopy.

The collapsible tent may further comprise a foldable frame, wherein at least one frame member of the foldable frame is connected to a first base section of the foldable base such that it is configured to be erected by the pivoting movement of the first base section of the foldable base as the collapsible tent is arranged into the use state. The foldable frame can thus be more easily erected, as it follows the unfolding of the foldable base into the use state of the collapsible tent.

The collapsible tent may further comprise at least one support for supporting the collapsible tent against a support surface, the at least one support being moveable between a raised and an extended position and wherein a first support portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

The locking mechanism may be configured to be operated by foot when the coupling arrangement is attached to the vehicle, thus allowing the user to have both hands available for pivoting the collapsible tent or more specifically the foldable base thereof, in relation to the coupling arrangement.

The locking mechanism may be configured to be operated by hand when the collapsible tent is in the collapsed state and resting on the ground, allowing the user to easily unlock the coupling arrangement and pivot it in relation to the collapsible tent or specifically the foldable base thereof.

The collapsible tent may further comprise an angle section being arranged proximally of a base section of the foldable base in relation to the coupling arrangement, the base section defining a base plane of the foldable base when the collapsible tent is in the use state and wherein the angle section is arranged at an angle in relation to the base section. The angle section may thus form a headrest when the collapsible tent is in the use state and serve as a divider between the inside of the collapsible tent and the coupling arrangement. The angle section may further form a stop for the folding of the base sections as it limits the movement of the base sections in the proximal direction towards the coupling arrangement and further as a means for securing for instance the canopy of the collapsible tent in the space between the base sections.

The coupling arrangement may comprise a connector configured to connect the coupling arrangement to a rear of the vehicle in a pivoting movement of the coupling arrangement and such that the orientation of the coupling arrangement in relation to the vehicle is fixed. The rear mounting of the collapsible tent provides a reduction of the drag created by the collapsible tent on the vehicle, reducing the fuel/energy consumption thereof.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

In a third aspect is a method for mounting a collapsible tent on a vehicle provided, preferably to a rear of the vehicle. The collapsible tent comprising a coupling arrangement being pivotable in relation to a base of the collapsible tent, the coupling arrangement being configured for connection and release of the collapsible tent to and from the vehicle by a pivoting movement of the coupling arrangement. The method comprises the steps of:
- pivoting the coupling arrangement in relation to the foldable base, for instance from a stowed position to an extended position,
- connecting the coupling arrangement to the vehicle such that a relative orientation of the coupling arrangement and the vehicle is fixed. A more convenient and easy way of connecting the collapsible tent to a vehicle is thus provided, where the user does not have to move the entire collapsible tent but merely pivot the coupling arrangement thereof.

The method may, in an embodiment in which the collapsible tent comprises a locking mechanism, further comprise:
- releasing the coupling arrangement from the stowed position by actuating the locking mechanism.

The method may further comprise, after the coupling arrangement is connected to the vehicle such that the orientation of the coupling arrangement and the vehicle is fixed, the step of:
- pivoting the collapsible tent in relation to the coupling arrangement until the coupling arrangement is in the stowed position and the collapsible tent is in the raised position. The user thus will not have to carry the full weight of the collapsible tent and can rely on the connection of the coupling arrangement to the vehicle to carry a significant part of the weight.

In a fourth aspect is a method provided for transferring a collapsible tent from a raised position to a lowered position in the collapsed state of the collapsible tent when the tent is mounted on a vehicle, preferably to a rear thereof. The collapsible tent further comprises a coupling arrangement being pivotable in relation to a foldable base of the collapsible tent, the coupling arrangement being configured for connection and release of the collapsible tent from the vehicle by a pivoting movement of the coupling arrangement. The method comprising the step of:
- pivoting the collapsible tent in relation to the coupling arrangement around a pivot axis from the raised position to the lowered position of the collapsible tent. The user will thus not have to carry the entire weight of the collapsible tent as it, or specifically the foldable base thereof, pivots in relation to the coupling arrangement.

The method may, in an embodiment in which the collapsible tent further comprises a locking mechanism for locking the coupling arrangement in the stowed position in relation to the foldable base, further comprise:
- actuating the locking mechanism to release the coupling arrangement from the stowed position and the collapsible tent from the raised position.

The locking mechanism may in an embodiment be arranged on a first side of the collapsible tent such that it is actuatable by the foot of a user when the collapsible tent is mounted on a vehicle in the raised position and in the collapsed state, wherein the step of actuating the locking mechanism further comprises a user using a foot to actuate the locking mechanism. The user will thus have both hands available to move the collapsible tent, or more specifically the foldable base thereof, in relation to the coupling arrangement from the raised position to the lowered position.

In fifth aspect is a collapsible tent provided being configured to be mounted to a vehicle, the collapsible tent comprising:
a base for forming a floor of the tent, the foldable base comprises at least two sections being pivotable in relation to each other between a use state and a collapsed state of the collapsible tent,
a coupling arrangement for connection of the collapsible tent to the vehicle,
wherein the collapsible tent further comprises an angle section being arranged proximally of a base section of the foldable base in relation to the coupling arrangement, the base section defining a base plane of the foldable base when the collapsible tent is in the use state and wherein the angle section being arranged at an angle in relation to the base section. The angle section may thus form a headrest when the collapsible tent is in the use state and serve as a divider between the inside of the collapsible tent and the coupling arrangement. The angle section may further form a stop for the folding of the base sections as it limits the movement of the base sections in the proximal direction towards the coupling arrangement and further as a means for securing for instance a canopy of the collapsible tent in a space between the base sections.

The angle section may be arranged at a fixed angle in relation to the base section.

The angle between the angle section and the base section may be between 80° and 100°, preferably approximately 90°.

The angle section may be configured to be arranged on a first side of the collapsible tent, the first side forming an upper side of the collapsible tent when the collapsible tent is in the collapsed state and resting on the ground, a sideways facing side when the collapsible tent is in the use state and an underside of the collapsible tent when the collapsible tent is in the collapsed state and mounted on a vehicle. The angle section thus provides a plurality of functions depending on the state and orientation of the collapsible tent, such as a base for the coupling arrangement, or an associated frame member thereof, to be mounted to, a headrest and divider when the collapsible tent is in the use state and a means for closing in the downwardly direction of the space formed between the base sections when the collapsible tent is in the collapsed state and mounted on the vehicle.

The collapsible tent may further comprise a foldable frame being attached to the foldable base and foldable with the folding of the foldable base, wherein the collapsible tent comprises a frame tensioning arrangement configured to erect at least a proximal frame member when the collapsible tent is in the use state.

The frame tensioning arrangement may comprise an elongate tensioning member connected between the angle section and at least a proximal frame member, thus facilitating the erection of the proximal frame member. Moreover, the angle section provides an elevated mounting position of the end of the elongate tensioning member in relation to the base section, which improves the angular relationship for the force provided thereby to the proximal frame member such that it pulls the proximal frame member with more proximally directed force.

The coupling arrangement may be pivotable in relation to at least one of the base sections, the coupling arrangement being configured for connection and/or release of the collapsible tent to and/or from the vehicle by a pivoting movement of the coupling arrangement. The connection of the collapsible tent to the vehicle by means of a pivotable coupling arrangement greatly reduces the strain on the user when handling the tent during connection and disconnection thereof to/from the vehicle.

A first base section of the foldable base may be configured to be arranged distally of a second base section and a third base section of the foldable base in relation to the coupling arrangement when the collapsible tent is in the use state and wherein the first base section is configured to be arranged intermediately of the second base section and the third base section when the collapsible tent is in the collapsed state. As such, the collapsible tent, specifically the foldable base thereof, is compactly folded into the collapsed state while providing sufficient size of the base when in the use state. The aforementioned relationship of the base sections further facilitates folding and unfolding of the foldable base, as the base sections can essentially be folded/unfolded in a rolling fashion in either the distal to proximal direction, i.e. from the side furthest away from the coupling arrangement and towards the coupling arrangement, or in the opposite proximal to distal direction.

The proximal frame member may comprise a respective frame member arranged on either lateral side of the collapsible tent and wherein the frame tensioning arrangement is configured to erect both lateral frame members of the proximal frame member simultaneously, thus facilitating erection of the proximal frame member.

The coupling arrangement may comprise a connector configured to connect the coupling arrangement to the vehicle in a pivoting movement of the coupling arrangement and such that the orientation of the coupling arrangement in relation to the vehicle is fixed.

The connector may be a clamp connector being configured to support the collapsible tent on a tow ball of the vehicle such that the orientation of the coupling arrangement in relation to the tow ball is fixed.

The connector may comprise a releasable hitch adapter being configured to support the collapsible tent on a hitch receiver of the vehicle such that the orientation of the coupling arrangement in relation to the hitch receiver is fixed.

The collapsible tent may further comprise at least one support for supporting the collapsible tent against a support surface, the at least one support being moveable between a raised and an extended position and wherein a first support portion of the at least one support is configured to be arranged such that it extends in parallel with the extension of the foldable base when the collapsible tent is in the use state and such that it extends below at least two adjacent base sections when the support is in the extended position. The at least one support can in the raised position be kept out of the way and be made compact such that it does not prevent folding of the collapsible tent. Further, in the extended state it may not only provide a sufficient distance between the base and the underlying support surface, it may further stabilize the relative position of two adjacent base sections by reducing movement in the joint between them.

The collapsible tent may in the collapsed state be configured to be pivoted between a raised and a lowered position in relation to the coupling arrangement when the coupling arrangement is attached to the vehicle. The collapsible tent may thus be more easily handled by the user when in the collapsed state, allowing it to be raised and lowered when in the collapsed state, for instance facilitating access to the trunk of the vehicle. A base section of the foldable base may be arranged in an upwardly facing position in the lowered position of the collapsible tent when the coupling arrangement is attached to the vehicle. The upwards facing base section may form a work surface or a surface that can be used for facilitating moving things into and out of the trunk of the associated vehicle.

In a sixth aspect of the present disclosure is a collapsible tent provided being configured to be foldable between a use state and a collapsed state. The collapsible tent comprising a foldable frame foldable with the folding of the collapsible tent between the use state and the collapsed state, wherein the foldable frame is configured to support a canopy from an external side thereof. Accordingly, the canopy does not need to be provided with any openings for the foldable frame and thus can the waterproofing thereof be improved. Moreover, the wear from the frame during folding is reduced. Additionally, raising of the tent and collapsing / folding of the tent is facilitated as the user does not need to disconnect the foldable frame from the collapsible tent, specifically from the foldable base thereof, upon folding thereof
At least one frame member of the foldable frame may be arranged at least partially externally of the canopy. Further, at least one frame member of the foldable frame may be arranged externally of the canopy.

Further still, the canopy may form a sealable enclosure comprising:
a bottom portion forming a floor of the collapsible tent and being arranged against a base of the collapsible tent, and
a top portion attached to the bottom portion for forming walls and roof of the collapsible tent. Accordingly, the bottom portion may be formed from a specific material suitable for the intended use and as the canopy is supported externally it does not need to be provided with openings. It may thus be entirely sealable, whereby waterproofing can be improved. Similarly, the top portion can be formed from a specific material suitable for the intended use thereof and without openings for the foldable frame.

The foldable frame may be hingedly arranged in relation to a base of the collapsible tent and wherein each frame hinge may be arranged externally of the canopy. In addition to improved waterproofing, the risk of injury is reduced as a layer of the canopy material will be arranged between the user and the foldable frame hinge during intended use of the collapsible tent.

At least one canopy supporting element may be provided for forming the connection between the canopy and the foldable frame.

The foldable frame may be configured to remain attached to a base of the collapsible tent during transition between the use state and the collapsed state of the collapsible tent.

The at least one canopy supporting element may be attached to the foldable frame 108 by means of a keder arranged in a keder rail.

The at least one canopy supporting element may extend in the direction of the extension of an interconnecting element of the foldable frame, accordingly providing a continuous extending suspension of the canopy. As such, the forces from the suspension of the canopy are distributed over a larger area of the canopy, which improves the strength of the suspension and further facilitates providing a aesthetically pleasing appearance.

The at least one canopy supporting element may be sewn to the canopy.

The collapsible tent may further comprise an elongate tensioning member for tensioning the foldable frame and wherein the elongate tensioning member extends through a slot in the tent canopy such that when tension is applied by the elongate tensioning member to the foldable frame and the collapsible tent is in the use state, the elongate tensioning member supports at least a portion of the tent canopy. Accordingly, the steps of raising the tent is reduced as the tent canopy will be correctly arranged by tensioning the foldable frame by means of the elongate tensioning member.

The foldable frame may comprise at least one frame member and wherein each frame member comprises first and second leg portions and at least one interconnecting element connecting said first and second leg portions. The interconnecting element being configured to support the canopy.

At least one frame member may further comprise a folding hinge between each first and second leg portion and each respective interconnecting element. The hinge may comprise an attachment for a rain fly support rod, thus reducing the need for any separate attachments and facilitating manufacturing of the collapsible tent.

The first and second leg portions on at least one frame member may be connected by at least two interconnecting elements, distributing the suspension of the canopy to two interconnecting elements for a single pair of leg portions. Accordingly, as only one pair of leg portions is used for two or more interconnecting elements, more space if available along the base for instance for allowing larger or more openings in the canopy.

Each interconnecting element may be configured to be pivotable between an unfolded position and a folded position in relation its respective first and second leg portions, allowing the total height of each frame member to be reduced in the collapsed state of the collapsible tent.

The foldable frame may comprise a distal frame member and a proximal frame member and wherein at least one frame member is erected by placing the collapsible tent in the use state. Accordingly, unfolding of the foldable base suffices for bringing the distal frame member into the intended position thereof when the tent is in the use state. The number of steps necessary for the user for erecting the tent is thus reduced. Moreover, at least one frame member may be erected by a second frame tensioning arrangement comprising an elongate tensioning member having a fixed length.

The foldable frame may comprise at least one frame member and wherein each frame member comprises first and second leg portions and at least one interconnecting element connecting said first and second leg portions. The at least one interconnecting element being configured to support the canopy. The frame member further comprises an elastic element providing a tensioning force to the at least one interconnecting element acting in the direction towards the collapsed state of the associated frame member when the collapsible tent is in the use state. Accordingly, the folding of the frame member is facilitated as the elastic element will pull the interconnecting element towards the folded position.

The collapsible tent may further comprise a coupling arrangement for connection of the collapsible tent to the vehicle, the coupling arrangement being pivotable in relation to at least one of the base sections of the foldable base. The coupling arrangement being configured for connection and/or release of the collapsible tent to and/or from the vehicle by a pivoting movement of the coupling arrangement in relation to at least one of the base sections. Accordingly, a user will not have to move neither of the collapsible tent or the associated vehicle to connect/disconnect them to/from each other.

The collapsible tent may further comprise a travel cover configured to prevent water ingress into a space inside a circumference formed by the foldable base when the collapsible tent is in the collapsed state. The travel cover comprising oppositely arranged first and second lateral portions configured to cover corresponding lateral openings to said space. The travel cover further comprising a connecting portion connecting said first and second lateral portions. The provision of the travel cover facilitates transport of the collapsible tent.

Each lateral portion may comprise a circumferential portion configured to envelope the circumference of the collapsible tent in the collapsed state and wherein the connecting portion is connected to the respective first and second lateral portions around a portion of the length of the circumferential portion.

The travel cover may be configured to be attached to the collapsible tent by means of at least two zip fasteners, providing a quick and reliable connection therebetween.

Each lateral portion may comprise a zip fastener configured to engage with a corresponding zip fastener on the collapsible tent, the zip fastener having a length with extension at least a portion of the circumference around the collapsible tent in the collapsed state.

The connecting portion may comprise a connecting portion zip fastener configured to engage with a corresponding connecting portion zip fastener on the collapsible tent. The connecting portion zip fastener on the collapsible tent being arranged on an upwards facing surface thereof.

According to an seventh aspect of the present disclosure, a travel cover for a collapsible tent is provided. The travel cover being configured to prevent water ingress into a space when the collapsible tent is in a collapsed state, wherein said travel cover comprising oppositely arranged first and second lateral portions configured to cover corresponding lateral openings to said space. The travel cover further comprising a connecting portion connecting said first and second lateral portions. Accordingly, transportation of a collapsible tent is facilitated and the subjection thereof to water and road debris is reduced.

Each lateral portion may comprise a circumferential portion configured to envelope the circumference of the collapsible tent in the collapsed state and wherein the connecting portion is connected to the respective first and second lateral portions around a portion of the length of the circumferential portion. Accordingly, less material is needed for the manufacturing of the travel cover while providing the desired function.

Each circumferential portion may comprise a travel cover tensioning element configured to extend around the circumference of the collapsible tent in the collapsed state thereof.

Each circumferential portion may comprise a travel cover sealing element configured to extend around and abut against the circumference of the collapsible tent in the collapsed state thereof, thus further reducing the risk of water ingress into the space in the foldable base where the canopy and other components of the collapsible tent are arranged.

The travel cover sealing element may be arranged between the travel cover tensioning element and the collapsible tent, thus providing a compression force to the travel cover sealing element and improving the sealing effect.

The travel cover may be configured to be attached to the collapsible tent by means of at least two zip fasteners, providing a quick and reliable connection of the travel cover to a collapsible tent.

Each lateral portion may comprise a zip fastener configured to engage with a corresponding zip fastener on the collapsible tent, the zip fastener having a length with extension at least a portion of the circumference around the collapsible tent in the collapsed state.

The connecting portion may comprise a connecting portion zip fastener configured to engage with a corresponding connecting portion zip fastener on the collapsible tent, the connecting portion zip fastener on the collapsible tent being arranged on an upwards facing surface thereof, thus reducing the risk of water ingress of water running over the top / upwards facing surface of the tent and inside of the travel cover.

According to a eight aspect of the present disclosure is a collapsible tent provided being configured to be mounted to a vehicle. The collapsible tent being foldable between a use state and a collapsed state, the collapsible tent comprising a foldable base for forming a floor of the tent, the foldable base comprises at least two base sections being pivotable in relation to each other between the use state and the collapsed state.

At least a distal base section of the foldable base may be configured to be arranged inside a space defined by a circumference formed by the remaining base sections of the foldable base when the collapsible tent is in the collapsed state. Accordingly, the size of the circumference of the collapsible tent, specifically the foldable base thereof, can be reduced. Moreover, the risk of water ingress can be reduced as the base sections forms a circumference.

The foldable base may further comprise an angle section being arranged at an angle in relation to an adjacent base section and wherein the angle section forms part of the circumference of the foldable base.

The foldable base may comprise at least four base sections and wherein each of at least two intermediate base sections are arranged, in the collapsed state of the collapsible tent, end-to-end and pivoted in relation to a respective proximal base section with a base section pivot angle. The base section pivot angle may be between 70° and 110°, preferably approximately 90°.

The collapsible tent may further comprise a sealing element extending between at least two adjacent base sections, said sealing element being configured to prevent water ingress between the at least two adjacent base sections. Accordingly, the risk of water ingress is reduced both during use and during transport of the collapsible tent. The sealing element may extend only in a lateral direction in relation to the collapsible tent.

The sealing element may be attached between said at least two adjacent base sections by means of keder, facilitating replacement of the sealing element in case of damage.

At least one base section may be connected to a respective adjacent base section on either side by a respective sealing element.

The at least one base section connected to a respective adjacent base section on either side by a respective sealing element may be arranged as an upper base section, i.e. on the second side of the collapsible tent and facing upwards, when the collapsible tent is in the collapsed state and in a raised position when supported by a vehicle. Accordingly, water ingress from water running in between the base sections from the top of the collapsible tent is reduced.

A cavity may be provided with lateral extension in an interface on the exterior side between each of said at least one base section and said adjacent base section where a sealing element extends, said cavity being configured to accommodate at least a portion of the sealing element when the collapsible tent is in the use state. Accordingly, as the distance which the sealing element have to extend between the base sections changes depending on the folding state, the cavity allows accommodation of the excessive length during use of the collapsible tent. This further reduces the risk of damage to the sealing element, for instance by being pinched between a support and the foldable base.

The collapsible tent may further comprise at least one support for supporting the collapsible tent, the support comprising a first support portion being configured to be arranged such that it extends in parallel with the extension of the foldable base when the collapsible tent is in the use state and such that it extends below at least two adjacent base sections, wherein the length of the first support portion can be adjusted. Accordingly, the support can be more easily transported by shortening the length of the first support portion. Moreover, stable support along the longitudinal length of the collapsible tent may be provided by extending the length of the first support portion. At least two supports may be provided.

The length of the first support portion may be adjusted between a minimum length being less than a lateral width of the base and a maximum length extending at least partially under each base section of the base. Each support may be configured to be attached to the collapsible tent in a use position and in a stowed position.

The collapsible tent may further comprise attachment members for securing each support to the collapsible tent. The attachment members may be positioned such that they are configured to align the first support portion of each support when in the use position.

The base may be configured to be folded between the use state and the collapsed state and vice versa while being attached to the at least one support, accordingly facilitating folding and unfolding of the foldable base. The support may thus support the weight of the collapsible tent, specifically the foldable base thereof, during the entire folding process between when the tent brought from/into the collapsed state and raised position in relation to a vehicle and to/from the use state and being fully supported by the support. The foldable base 102 will thus not have to be supported against the ground when transferred between a vehicle and the support.

The collapsible tent may further comprise a coupling arrangement for connection of the collapsible tent to the vehicle, wherein the collapsible tent is configured to be transferable between a raised position and a lowered position in relation to the coupling arrangement while being attached to the at least one support.

The at least one support may comprise a connection member configured to be attached to the collapsible tent such that one end of the at least one support is supported by the collapsible tent when the collapsible tent is mounted to a vehicle. Accordingly, the connection member allows the support to be brought into the correct position relative the foldable base before the collapsible tent is released from the vehicle.

The connection member may be configured to be attached to a coupling arrangement shaft being concentric with a coupling arrangement pivot axis, thus facilitating pivoting of the foldable base to and from the raised position and into/from the lowered position when resting against the at least one support.

Each support may comprise a first leg and a second leg arranged at opposite ends of the support and wherein a length of the first leg and the second leg is adjustable.

The collapsible tent may comprise at least two supports and wherein a supporting brace is provided interconnecting each support, preferably each leg thereof. The stability of the dual supports is thus improved. Each supporting brace is preferably removable and can be stored inside the space formed in the foldable base when the collapsible tent is in the collapsed state.

The collapsible tent may further comprise at least one light fixture. The light fixture may be connected to the vehicle by means of a standard 13 pin connector or other equivalent connectors. The light fixture may provide indicator lights, position lights, reverse lights etc. as required in case the collapsible tent obscures the lights of the associated vehicle.

The at least one light fixture may be arranged at least partially inside a space formed in an externally chamfered edge of the collapsible tent.

In a ninth aspect of the present disclosure is a quick connector provided for attachment to a corresponding hitch adapter being secured to a hitch receiver on a vehicle. The quick connector comprises clamping mechanism having clamping jaws operatively connected to an actuator. The clamping jaws defining a clamping zone, wherein said quick connector is configured for arranging of the hitch adapter in the clamping zone by a pivoting and/or vertical movement of the quick connector. Accordingly, connection to a hitch adapter is facilitated as horizontal movement for bringing the hitch adapter into the clamping zone is not required.

The quick connector may comprise housing having a hitch adapter opening extending from a downwards facing side to a hitch adapter facing side thereof, said opening being configured to allow passage of the hitch adapter therethrough.

The clamping jaws may comprise an engagement element configured to cooperate with a corresponding engagement element on the hitch adapter. The engagement element improves the force transferring capability between the hitch adapter and the quick connector and reduces the risk of unintentional release of the hitch adapter.

The engagement element on the clamping jaws may be an opening in each clamping jaw and the engagement element on the hitch adapter may be a respective protrusion corresponding to the opening in each clamping jaw.

The hitch adapter may have a rectangular cross section configured to be compatible with standard hitch receivers, and wherein each clamping jaw comprises a side engagement surface for engaging a side surface of the hitch adapter and a bottom engagement surface for engaging a bottom surface of the hitch adapter and wherein the side engagement surface and the bottom engagement surface are essentially perpendicularly arranged. The aforementioned arrangement of the clamping jaws improves the ability for the jaws to grip around the hitch adapter.

The engagement element on the clamping jaws may be arranged on the side engagement surface thereof.

The quick connector may further comprise a bracket in relation to which the clamping jaws are pivotably arranged and wherein an upper engagement surface for engaging an upper surface of the hitch adapter is arranged on the bracket. Accordingly, the clamping jaws together with the bracket may from a clamping zone essentially conforming to the shape of the hitch adapter, providing a strong connection therebetween and allowing high torque loads to be withstood.

The clamping jaws may be pivotable between an open position and a clamping position, wherein a linkage between the actuator and the clamping jaws is configured to translate a translatory movement of a translation shaft to a rotational movement of a respective clamping jaw shaft. A compact linkage can thus be achieved while providing a high clamping force to the hitch adapter.

The linkage may further be configured to translate a rotational movement of an actuator shaft associated with an actuator handle to the translatory movement of the translation shaft. The actuator handle can thus be easily operated with one hand by a user, while achieving the required clamping force from the clamping jaws to the hitch adapter.

In an tenth aspect is a collapsible tent configured to be mounted to a vehicle provided. The collapsible tent being foldable between a use state and a collapsed state. The collapsible tent comprising a coupling arrangement comprising a quick connector according to any one of the preceding items, the coupling arrangement being pivotable in relation a foldable base of the collapsible tent, the coupling arrangement being configured for connection and/or release of the collapsible tent to and/or from the vehicle by a pivoting movement of the coupling arrangement in relation to the foldable base.

Generally, all terms used in the claims are to be interpreted according to their ordinary meaning in the technical field, unless explicitly defined other herein. All references to "a/an/the [element, device, component, means, step, etc]" are to be interpreted openly as referring to at least one instance of said element, device, component, means, step, etc, unless explicitly stated otherwise. The steps of any method disclosed herein do not have to be performed in the exact order disclosed, unless explicitly stated.

### BRIEF DESCRIPTION OF THE DRAWINGS

With reference to the appended drawings, below follows a more detailed description of embodiments of the invention cited as examples.

In the drawings:
Figure 1 discloses a side view of a collapsible tent with the coupling arrangement in the stowed position.
Figure 2 discloses a side view of a collapsible tent with the coupling arrangement in the extended position.
Figure 3a discloses a side view of a collapsible tent in a collapsed state and in a raised position when connected to a vehicle.
Figure 3b discloses a side view of a collapsible tent in a collapsed state and in a lowered position when connected to a vehicle.
Figure 3c discloses a side view of a collapsible tent during folding/unfolding when connected to a vehicle.
Figure 3d discloses a side view of a collapsible tent in a use state when connected to a vehicle.
Figure 4 discloses a side view of a collapsible tent in a collapsed state and in a lowered position when connected to a vehicle.
Figure 5a discloses a detail view of a support in a raised position.
Figure 5b discloses a detail view of a support in an extended position.
Figure 6a discloses a detail view of a support in a raised position.
Figure 6b discloses a detail view of a support in between a raised position and an extended position.
Figure 6c discloses a detail view of a support in an extended position.
Figure 7 discloses a side view of a collapsible tent in a use state when connected to a vehicle.
Figure 8 discloses a side view of a collapsible tent in a use state when disconnected from a vehicle.
Figure 9 discloses a perspective view of a collapsible tent in a use state.
Figure 10 discloses a side view of a collapsible tent in the collapsed state.
Figure 11 discloses a side of a collapsible tent in the collapsed state.
Figure 12 discloses a side view of a collapsible tent in a collapsed state and in the lowered position when connected to a vehicle.
Figure 13 discloses a side view of a collapsible tent in the collapsed state.
Figure 14 discloses a perspective view of a collapsible tent in a use state.
Figure 15 discloses a schematic flowchart of a method for mounting a collapsible tent on a vehicle.
Figure 16 discloses a schematic flowchart of a method for transferring a collapsible tent from a raised position to a lowered position in the collapsed state of the collapsible tent when the tent is mounted on a vehicle.
Figure 17 discloses a side view of a collapsible tent in the use state.
Figure 18 discloses a bottom perspective view of a collapsible tent in a use state.
Figure 19 discloses a side view of a collapsible tent in a collapsed state, raised position and when mounted to a vehicle.
Figure 20 discloses a rear perspective view of a collapsible tent in a collapsed state, raised position and when mounted to a vehicle.
Figure 21 discloses a detail perspective view of a coupling arrangement and support of a collapsible tent.
Figure 22 discloses a side view of a collapsible tent, specifically a foldable base thereof, being moved between a raised and lowered position in relation to a coupling arrangement and at least one support while being attached to a vehicle.
Figure 23 discloses a perspective view of a collapsible tent provided with rain fly support rods.
Figure 24 discloses a detail view of a folding hinge and an associated rain fly support rod.
Figure 25 discloses a detail perspective bottom view of an interconnecting element.
Figure 26 discloses a front detail view of an interconnecting element, an associated canopy supporting element and a canopy of the collapsible tent.
Figure 27 discloses a side cross sectioned view of an interconnecting element, an associated canopy supporting element and a canopy of the collapsible tent.
Figure 28 discloses a side detail view of a fourth base section of a foldable base of a collapsible tent.
Figure 29 discloses a side detail view of sealing element 192 between two base sections of the foldable base.
Figure 30 discloses a perspective view of coupling arrangement comprising a quick connector.
Figures 31 and 32 discloses a perspective and top view of a hitch adapter for a quick connector.
Figures 33 and 34 discloses perspective views of a quick connector in an open and closed state respectively.
Figures 35 and 36 discloses perspective views of a quick connector linkage.
Figure 37 discloses a perspective view of a collapsible tent comprising a travel cover.
Figure 38 discloses a perspective view of a travel cover.
Figure 39 discloses a perspective view of a travel cover.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

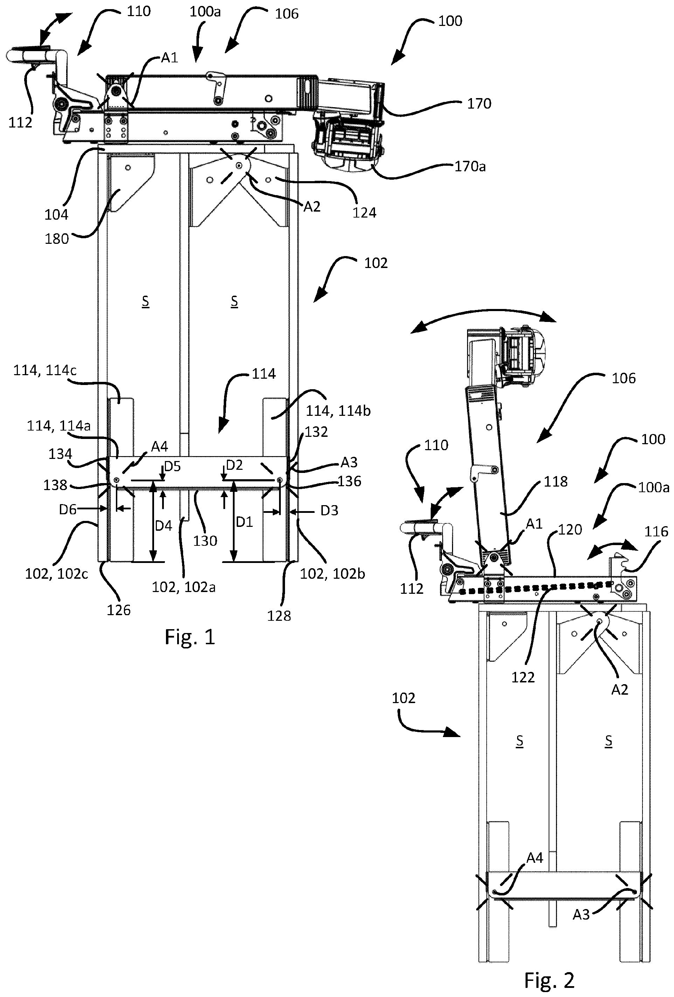

Figure 1 discloses a side view of a collapsible tent 100 which is configured to be mounted to a vehicle, depicted in a collapsed state. In the present disclosure, the vehicle should be considered as any suitable people carrier such as a car, truck, pick-up track etc. which is suited for carrying the collapsible tent 100.

The collapsible tent 100 is foldable, i.e. collapsible between a use state and the collapsed state. For this purpose, the collapsible tent 100 comprise a foldable base 102 for forming a floor of the tent. The foldable base 102 may be manufactured from any suitable material such as wood, a polymeric material, a composite material, a layered material etc. The foldable base 102 comprises at least two base sections 102a, 102b, 102c being pivotable in relation to each other between the use state and the collapsed state. In the present disclosure, the use state is the state in which the collapsible tent 100 is when it is used for camping. I.e., with the foldable base 102 in its unfolded and flat configuration. The collapsed state is to be interpreted as the configuration of the collapsible tent 100 when the foldable base 102 is folded into the compact state for instance for storage or transportation of the collapsible tent 100.

The collapsible tent 100 may further comprise a coupling arrangement 106 being pivotable in relation to at least one of the base sections 102a, 102b, 102c of the foldable base, the coupling arrangement 106 being configured for connection and/or release of the collapsible tent 100 to and/or from the vehicle V by a pivoting movement of the coupling arrangement 106. Optionally, the coupling arrangement 106 is configured to connect to a tow ball or a hitch of the vehicle such that the relative orientation of the coupling arrangement 106 and the vehicle is fixed. The pivoting movement of the coupling arrangement 106 in relation to at least one of the base section 102a, 102b, 102c, i.e. to the remainder of the collapsible tent 100, not only facilitates the connection and/or disconnection of the collapsible tent 100 to the vehicle V but further allows the collapsible tent 100 to be moved in a pivoting movement between a raised and lowered position in relation to the vehicle V and the coupling arrangement 106 connected thereto which facilitates mounting of the collapsible tent 100 to the vehicle V, as will elaborated further on below. The raised position of the collapsible tent 100 is the orientation of the collapsible tent 100 in relation to the vehicle V and the coupling arrangement 106 when it is being transported by the vehicle. The lowered position is the orientation of the collapsible tent 100 when pivoted out of the raised position in relation to the vehicle V and the coupling arrangement 106, for instance for unfolding into the use state of the collapsible tent 100.

For the fixation of the relative orientation between the coupling arrangement 106 and the vehicle, the coupling arrangement 106 may be provided with connector 170, such as a clamp connector 170 having an actuator 170a, such as a lever, for, by means of a clamping force, fixating the coupling arrangement 106 to a tow ball of the vehicle. Such clamp connectors 108 and associated levers 170a are known in the art and will thus not be explained further in the present disclosure. It is however to be realized that the teachings herein are not limited to connection to tow balls by means of a clamp connector. Other known equivalent means of connection of the coupling arrangement 106 to the tow ball are also considered to be part of this disclosure.

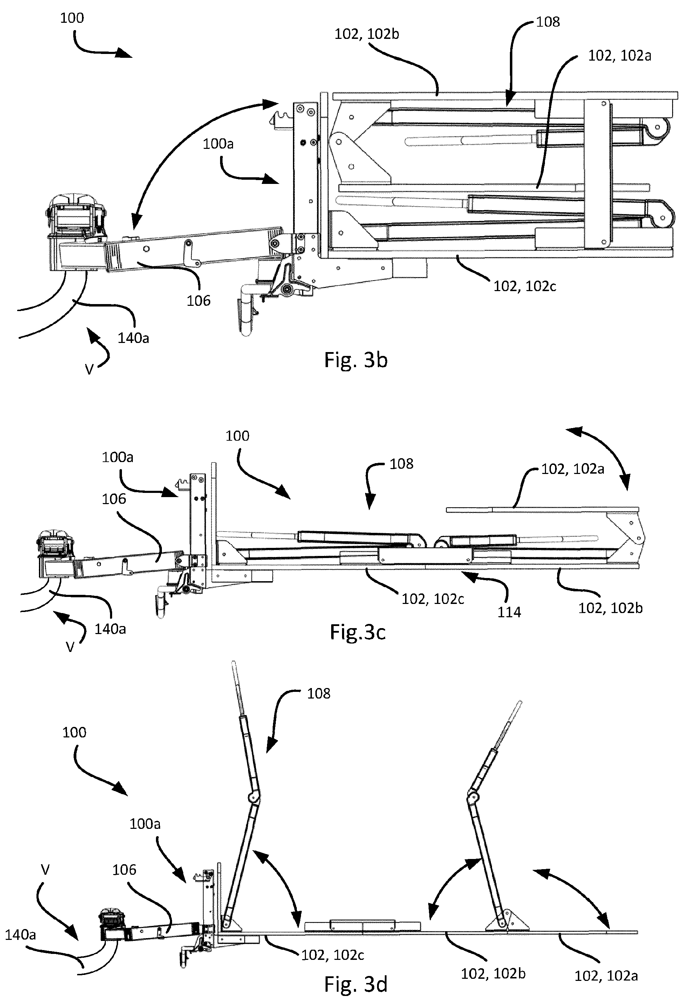

The collapsible tent 100 in the embodiment shown in Figure 1 comprises a first base section 102a, a second base section 102b and a third base section 102c. The base sections 102a, 102b, 102c together forms the floor of the tent 100 when the collapsible tent 100 is arranged in the use state, as is illustrated in for instance Figure 3d. Optionally, the first base section 102a of the foldable base is configured to be arranged distally of the second base section 102b and the third base section 102c of the foldable base in relation to the coupling arrangement 106 when the collapsible tent 100 is in the use state and the first base section 102a is configured to be arranged intermediately of the second base section 102b and the third base section 102c when the collapsible tent 100 is in the collapsed state. The collapsible tent 100 is thus made compact when in the collapsed state and the folding/unfolding of the base 102 is facilitated.

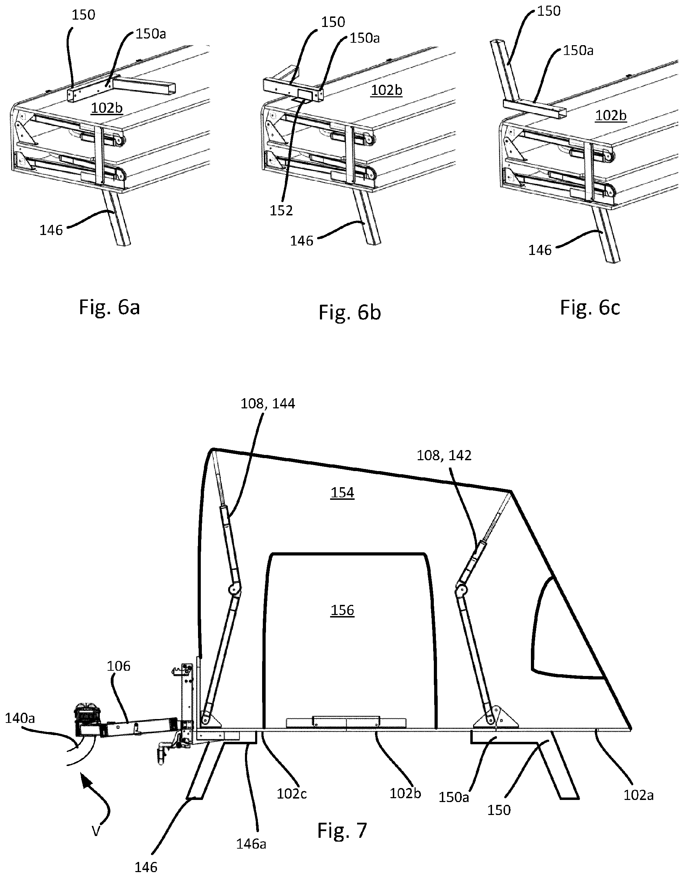

The second base section 102b may in an embodiment be connected to the third base section 102c by means of a first hinge 114. Optionally, one first hinge 114 is arranged on each lateral side of the collapsible tent 100. The hinge 114 facilitates that the second base section 114b can pivot in relation to the third base section 114c. Optionally, as illustrated in Figure 1, the first hinge 114 may be a double joint hinge 114 such that the second base section 114b can be arranged essentially in parallel with the third base section 114c and spaced apart such that a space S is formed between the second base section 102b and the third base section 102c which is configured to hold at least the first base section 102a and a tent canopy (shown in Figure 7) when the collapsible tent 100 is in the collapsed state. The collapsible tent 100 is thus made compact and it is facilitated that the collapsible tent 100 can be carried for instance on the rear of smaller cars while not or only marginally restricting the rearward view for the driver. Additionally, drag of the collapsible tent 100 on the vehicle is also reduced.

Optionally, each first hinge 114 comprises a third portion 114c connected to the third base section 102c and a second portion 114b connected to the second base section 102b. The second portion 114b and third portion 114c are connected by a first portion 114a of the first hinge 114, the first portion being rotatably connected to both the second portion 114b and the third portion 114c. Accordingly, the collapsible tent 100 comprises a second base pivot axis A3 formed between the second portion 114b and the first portion 114a. Further the collapsible tent 100 comprises a third base pivot axis A4 formed between the third portion 114c and the first portion 114a. The second base pivot axis A3 and the third base pivot axis A4 together defines the movement between the second base section 114b and the third base section 114c.

Optionally, the second base pivot axis A3 is arranged at a distance D1 from an end 128 of the second base section 102b, such that the rotation of the first portion 114a in relation to the second portion 114b from the collapsed state to the use state of the collapsible tent 100 is limited by contact between the first portion 114a and the second base section 102b.

Optionally, a distance D2 between the second base pivot axis A3 and a first abutment surface 130 of the first portion 114a is essentially equal to a distance D3 between the second base pivot axis A3 and the second base section 102b.

Optionally, the distance between the second base pivot axis A3 and a second abutment surface 132 of the first portion 114a is essentially equal to the distance D3 between the second base pivot axis A3 and the second base section 102b. The second abutment surface 132 being essentially perpendicular to the first abutment surface 130 and arranged such that the rotation of the first portion 114a in relation to the second portion 114b from the use state to the collapsed state of the collapsible tent 100 is limited by contact between the first portion 114a and the second base section 102b. The first portion 114a further comprises a first intermediate surface 136 extending between the first abutment surface 130 and the second abutment surface 132 and having a radius extending from the second base pivot axis A3 that is essentially equal to distance D3. It is also conceivable that the first intermediate surface 136 may be a planar surface extending between the first abutment surface 130 and the second abutment surface 132.

Optionally, the third base pivot axis A4 is arranged at a distance D4 from an end 126 of the third base section 102c, such that the rotation of the first portion 114a in relation to the third portion 114c from the collapsed state to the use state of the collapsible tent 100 is limited by contact between the first portion 114a and the third base section 102c.

Optionally, a distance D5 between the third base pivot axis A3 and a first abutment surface 130 of the first portion 114a is essentially equal to a distance D6 between the third base pivot axis A4 and the third base section 102c.

Optionally, the distance between the third base pivot axis A4 and a third abutment surface 134 of the first portion 114a is essentially equal to the distance D6 between the second base pivot axis A3 and the second base section 102b. The third abutment surface 134 being essentially perpendicular to the first abutment surface 130 and arranged such that the rotation of the first portion 114a in relation to the third portion 114c from the use state to the collapsed state of the collapsible tent 100 is limited by contact between the first portion 114a and the third base section 102c. The first portion 114a further comprises a second intermediate surface 138 extending between the first abutment surface 130 and the third abutment surface 134 and having a radius extending from the third base pivot axis A4 that is essentially equal to distance D6. It is also conceivable that the second intermediate surface 138 may be a planar surface extending between the first abutment surface 130 and the third abutment surface 134.

In Figure 2, the collapsible tent 100 is shown with the coupling arrangement 106 pivoted from a stowed position, as illustrated in Figure 1, to an extended position. It is to be realized that the extended position should be interpreted simply as any position of the coupling arrangement 106 when it is not in the stowed position.

The collapsible tent 100 may comprise a locking mechanism 110 for locking the coupling arrangement 106 in the stowed position in relation to the foldable base 102. The locking mechanism is optionally arranged on a first side 100a of the collapsible tent 100 which is configured to be arranged facing upwards and form an upper side of the collapsible tent 100 when the collapsible tent 100 is not attached to a vehicle V and is in the collapsed state. The locking mechanism 110 may thus be configured to be operated by hand when the collapsible tent 100 is in the collapsed state and resting on the ground.

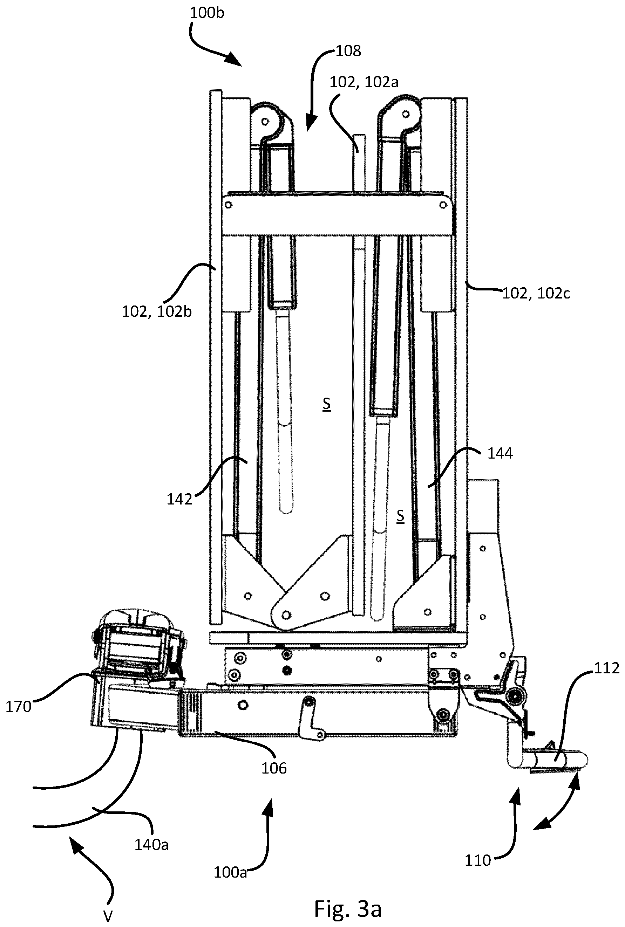

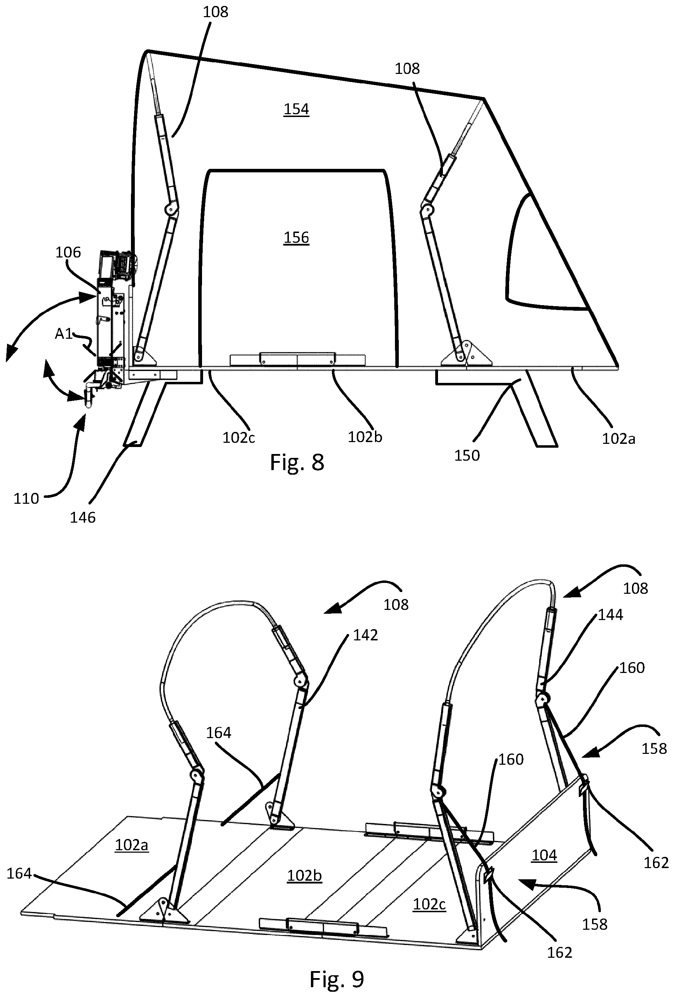

The locking mechanism optionally comprises an actuating member 112 that is moveable by a user, either by hand or by foot, in order to unlock and/or lock the coupling arrangement 106 in the stowed position. A control member 122 may further be provided which connects the actuating member 112 to a latch member 116 of the locking mechanism 110. The control member 122 may be formed for instance by a rod or a wire and is configured to move the latch member 116 into and out of engagement with the coupling arrangement 106 upon movement of the actuating member 112. Optionally, the latch member 116 is biased into the locked position, i.e. to the right in Figure 2, by means of a spring and is configured such that the coupling arrangement 106 can be locked in the stowed position without having to move the actuating member 112. The actuating member 112 is, as is illustrated in Figure 1, 3a and in Figure 8 configured to be easily accessible and actuatable for the user at each possible orientation and state of the collapsible tent 100.

A coupling arrangement pivot axis A1 around which the coupling arrangement 106 pivots is optionally essentially parallel with a base pivot axis A2, A3, A4 around which at least one of the at least two sections 102a, 102b, 102c of the foldable base 102 folds. The collapsible tent 100 thus folds out in the direction of travel of the vehicle to which it is attached, which is provides for a compact tent and facilitates folding of the collapsible tent 100.

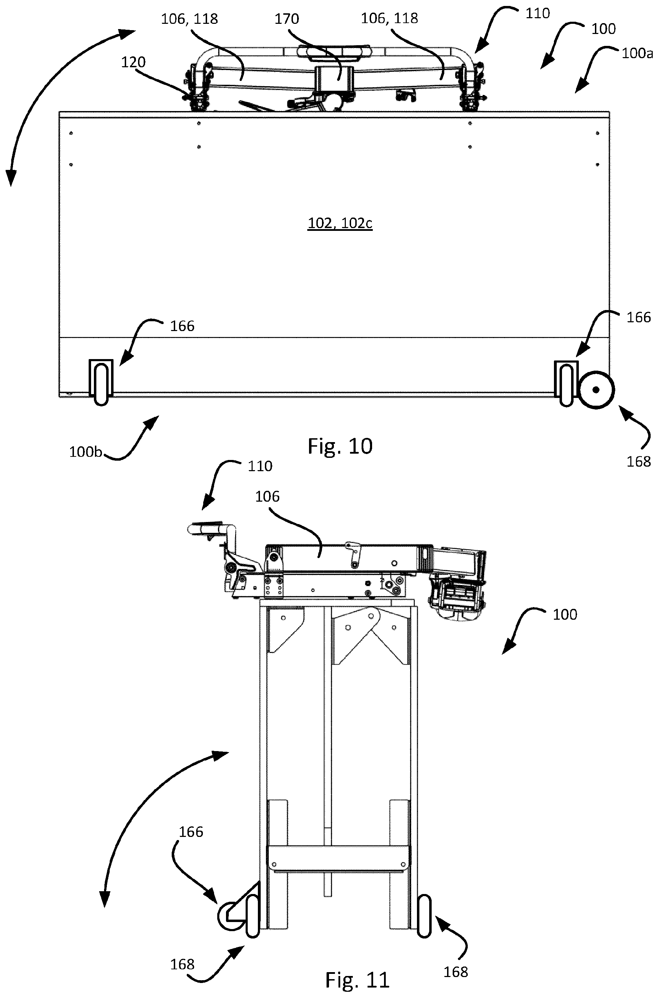

The collapsible tent 100 may further comprise a frame 120 to which the foldable base 102 and the coupling arrangement 106 is attached. Optionally, the coupling arrangement 106 comprises an arm 118 which extends between the connector 170 and the frame 120. Optionally is one arm 118 arranged on each lateral side of the coupling arrangement 106, extending from the connector 170 to opposite lateral sides of the frame 120, as is also further illustrated in Figure 10. Optionally, the locking mechanism 110 is associated with the frame 120 such that it pivots with the frame 120 and the remainder of the collapsible tent 100 in relation to the coupling arrangement 106.

Additionally, the third base section 102c may be in a fixed angular relationship with the frame 120 such that it is only the first base section 102a and the second base section 102b that folds/pivots between the use state and collapsed state of the collapsible tent 100.

Turning now to Figures 3a-3d, in which it is illustrated how the collapsible tent 100 may be lowered from a raised position to a lowered position in relation to a vehicle V and further unfolded from the collapsed state to the use state of the collapsible tent 100. The opposite process is naturally also possible, for mounting the collapsible tent 100 on the vehicle V.

In Figure 3a, the collapsible tent 100 is shown in a side view being connected/mounted to a vehicle V in the collapsed state of the collapsible tent 100 and in the raised position in relation to the vehicle V. When the collapsible tent 100 is in the raised position, the coupling arrangement 106 is optionally locked in the stowed position thereof. It is further shown how the collapsible tent 100 may comprise a foldable frame 108 which is foldable such that it fits into the space S between the first base section 102a and the second base section 102b when the collapsible tent 100 is in the collapsed state. The foldable frame 108 is configured to support a tent canopy 154, the tent canopy 154 may further as mentioned be configured to be folded with the foldable frame 108 and be arranged in the space S when the collapsible tent 100 is in the collapsed state. Additionally, the space S may hold mattresses and other items associated with the collapsible tent 100.

Optionally, at least one frame member 142 of the foldable frame is connected to the first base section 102a of the foldable base 100 such that it is configured to be erected by the pivoting movement of the first base section 102a of the foldable base 100 as the collapsible tent 100 is arranged into the use state. This will be elaborated further in conjunction with Figure 9 below.

The coupling arrangement 106 is in Figure 3a connected to the vehicle V, specifically to a tow ball 140a thereof. It is to be realized that the teachings herein are equally applicable for use with a hitch receiver 140b as well.

The coupling arrangement 106 is connected to the vehicle V such that the relative orientation of the coupling arrangement 106 and the vehicle V is fixed, i.e. such that coupling arrangement 106 will not move when the collapsible tent 100 is being transported by the vehicle V. The pivotable relationship between the coupling arrangement 106 and the remainder of the collapsible tent 100 allows the collapsible tent 100 to be moved between the raised and the lowered position while the coupling arrangement 106 remains fixed in orientation in relation to the vehicle V.

As is illustrated in Figure 3a, the locking mechanism 110 is configured to be operated by foot when the coupling arrangement 106 is attached to the vehicle V. The locking mechanism 110 is for this purpose arranged on the first side 100a of the collapsible tent 100 which is configured to be arranged facing downwards and form an underside of the collapsible tent 100 when the collapsible tent 100 is mounted to the vehicle V and is in the raised position. Specifically, the actuating member 112 of the locking mechanism 110 is arranged on the first side 100a and facing rearwardly such that it is accessible to the foot of a user when standing behind the vehicle V having the collapsible tent 100 mounted thereto, allowing the user to have both hands available for moving the collapsible tent 100 from the raised position to a lowered position in relation to the vehicle V and the coupling arrangement 106.

The first side 100a may form the underside of the collapsible tent 100 when the collapsible tent is in the collapsed state and in the raised position mounted on the vehicle V. When the collapsible tent 100 is in the collapsed state and resting on the ground, the first side 100a may form an upper side of the collapsible tent 100 as illustrated in e.g. Figure 1 and 2. When the collapsible tent 100 is in the use state, the first side 100a may form a sideways facing side of the collapsible tent 100, as is illustrated in Figure 3d. The locking mechanism 110 follows the pivoting movement of the first side 100a and is thus equally accessible and actuatable to a user in each state and orientation of the collapsible tent 100.

In Figure 3b, the collapsible tent 100 is shown in the collapsed state and in a lowered position in relation to the vehicle V and the coupling arrangement 106. In the lowered position, the first side 100a of the collapsible tent 100 faces towards the rear of the vehicle V when the collapsible tent 100 is still attached thereto. The functionality to lower the tent 100 from the raised position to the lowered position while still being attached via the coupling arrangement 106 to the vehicle V facilitates access to for instance a trunk of the vehicle V and further reduces the weight that the user have to carry when moving the collapsible tent 100 between the raised and lowered position.

The collapsible tent 100 may further be raised from the lowered position to the raised position, essentially reversing the process explained in the foregoing. However, the locking mechanism 110 may be configured to automatically lock the collapsible tent 100 in the raised position such that the user only has to focus on lifting/pivoting the collapsible tent 100 in relation to the coupling arrangement 106.

The collapsible tent 100 may further be locked in the collapsed state, i.e. such that the base sections 102a, 102b, 102c are locked in the mutual relationship illustrated in Figure 3b. The collapsible tent 100 may thus comprise a second locking mechanism (not shown) for locking and/or unlocking the base sections 102a, 102b, 102c such that the tent 100 can be folded from the collapsed state into the use state. It is also conceivable that the locking mechanism 110 may be in addition to locking the coupling arrangement in the stowed position also be configured to unlock the folding of the base section 102a, 102b, 102c.

In Figure 3c, the collapsible tent 100 is shown in a partially unfolded state between the collapsed state and the use state of the collapsible tent 100. It is further illustrated how the first hinge 114 forms a support for the alignment of the third base section 102c and the second base section 102b.

Subsequently, in Figure 3d, the collapsible tent 100 is brought into the use state by folding the first base section 102a into the plane of the second 102b and third base sections 102c. It is further illustrated how the collapsible tent 100 may be in the use state while the coupling arrangement 106 is still extended, i.e. not in the stowed position, and connected to the vehicle V.

Moreover, it is illustrated how the foldable frame 108 is unfolded such that it forms a support for the tent canopy, which is omitted from Figure 3d for clarity. The foldable frame 108 is optionally lockable in the unfolded/raised position illustrated in Figure 3d.

It is further to be realized that while the collapsible tent in Figure 3a-3d is illustrated as having a foldable frame 108, it is to be realized that the foregoing description is applicable to all embodiments disclosed herein for instance to a collapsible tent 100 not being provided with a foldable frame 108.

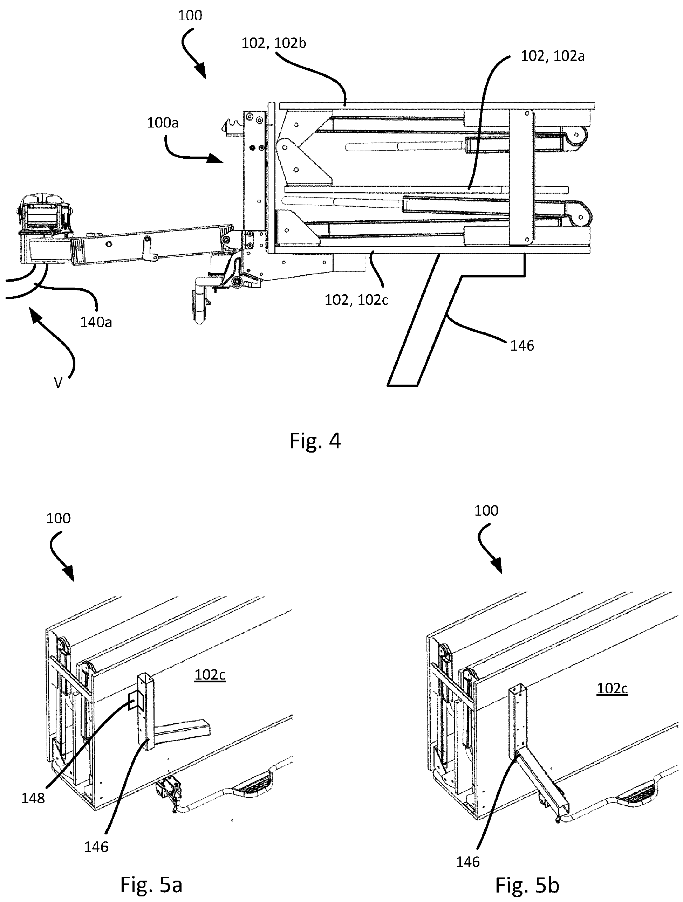

Turning to Figure 4 in which the collapsible tent 100 is shown in the collapsed state and in the lowered position. In Figure 4, the collapsible tent 100 is provided with at least one support 146 for supporting the collapsible tent 100 against a support surface, such as the ground. In Figure 4, the collapsible tent 100 is provided with a first support 146 being arranged on the third base section 102c such that it forms a stop when the collapsible tent 100 is lowered from the raised position into the lowered position. Optionally is one first support 146 arranged on each lateral side of the third base section 102c, however other arrangements and numbers of first supports 146 are also possible. The lateral direction in the present disclosure is to be interpreted as the direction perpendicular to a longitudinal direction and the direction of folding/unfolding of the foldable base 102. The longitudinal direction is to be interpreted as the direction of folding/unfolding of the foldable base 102 and is preferably, but not necessarily, parallel with the travelling direction of the associated vehicle V. The collapsible tent 100 will hence, by the provision of the first support 146, be more stable in the lowered position when it is connected to the vehicle V.

In Figures 5a and 5b, it is illustrated how the first support 146 may be configured to be moved between a raised and an extended position. In Figure 5a, the first support 146 is shown in its raised position, while it is illustrated in the extended position in Figure 5b. The first support 146 may thus be provided with a pivot member 148, such as a hinge, connecting the first support 146 to the third base section 102c and allowing it to be pivoted in relation thereto between the raised and extended position. Other means of achieving the movement between the raised and extended position are however also conceivable. For instance, the first support 146 may be provided with a telescopic portion allowing it to be extended to the desired length.

In Figures 6a to 6c, it is illustrated how the collapsible tent 100 may be provided with at least one second support 150. Optionally, as for the first support 146, is one second support 150 provided for each lateral side of the collapsible tent 100. It is further illustrated how the second support 150 may be configured to be moved between a raised and an extended position. In Figure 6a, the second support 150 is shown in its raised position, while it is illustrated in the extended position in Figure 6c. The second support 150 may thus be provided with a pivot member 152 connecting the second support 150 to the second base section 102b, allowing it to be pivoted in relation thereto between the raised and extended position. Other means of achieving the movement between the raised and extended position are however also conceivable. For instance, the second support 150 may be provided with a telescopic portion allowing it to be extended to the desired length. Moreover, the pivot member 152 may be configured to rotate in relation to the second base section 102b as illustrated in Figures 6a and 6b, allowing a first support portion 150a of the second support 150 to rotate between the positions illustrated in Figures 6a and 6b respectively. In Figure 6a, the first support portion 150a extends laterally in relation to the collapsible tent 100 while it extends essentially longitudinally in Figure 6b. It is however to be realized that the second support 150 may be rotated past the lateral and longitudinal position of the first support portion 150a in either direction. Additionally, the pivot member 152 allows the second support member 150 to pivot between the positions illustrated in Figures 6b and 6c. The pivoting movement of the second support member 150 does not have to take place when the first support portion 150a is arranged in the longitudinal direction of the collapsible tent, but may take place in any rotational orientation of the first support portion 150a. Each second support 150 may thus be configured to pivot around an axis being parallel the longitudinal extension of the first support portion 150a thereof.

In Figure 7, the collapsible tent 100 is shown from a side view in the use state while still being connected to a vehicle V. The collapsible tent 100 is provided with a canopy 154 being supported by the foldable frame 108. The canopy 154 further comprises an opening 156 facing in the lateral direction of the collapsible tent, the opening 156 may be at least partially connected to the remainder of the canopy 154 for instance by means of zip closure. Naturally, both lateral sides of the collapsible tent 100 may be provided with an opening 156.

In Figure 7, it is further illustrated how the first support portion 150a of a support 150, illustrated as the second support 150, is configured to be arranged such that it extends in parallel with the extension of the foldable base 102 when the collapsible tent 100 is in the use state and such that it extends below at least two adjacent base sections 102a, 102b, 102c when the support 150 is in the extended position. It is illustrated how each second support 150 may be arranged such that the first support portion 150a thereof extends underneath the joint between the first base section 102a and the second base section 102b, thus forming a reinforcement and stabilization of the relative orientation of the two base sections 102a,102b. It is further envisioned how a first support portion 146a of each first support 146 may similarly be configured to extend underneath the joint between the third base section 102c and the second base section 102b when in its extended position.

In Figure 8 is the collapsible tent 100 shown from a side view in the use state being freestanding, i.e. not connected to a vehicle.

In Figure 8 it is further illustrated how the coupling arrangement 106 can be pivoted around the coupling arrangement pivot axis A1 when the collapsible tent 100 is in the use state. In Figure 8, the coupling arrangement 106 is arranged in the stowed position where it may be locked in place by the locking mechanism 110. Connection and disconnection of the collapsible tent 100 to/from a vehicle is thus facilitated. The collapsible tent 100 can be accessed by the vehicle with reduced risk of damage to the vehicle as the vehicle as the coupling arrangement 106 can be extended when the vehicle is in position. Further, disconnecting the collapsible tent 100 from the vehicle is facilitated as only the coupling arrangement 106 needs to be pivoted in order to release the collapsible tent 100 from the vehicle. Moreover, as explained in the foregoing, the locking mechanism 110 is arranged on the first side 100a of the collapsible tent 100 which is arranged facing in the sideways, i.e. horizontal direction, and longitudinally when the collapsible tent 100 is in the use state. This allows the user to easily actuate the locking mechanism 100 as illustrated by the arrow in Figure 8, to release the coupling arrangement 106 from the stowed position.

In Figure 9 is a perspective side view of the collapsible tent 100 shown, the collapsible tent comprising a foldable base 102 for forming a floor of the tent, the foldable base comprising at least a first base section 102a, a second base section 102b and a third base section 102c. Naturally, more than three base sections 102a, 102b, 102c may also be provided. At least the first base section 102a and the second base section 102b are pivotable in relation to the adjacent sections 102a, 102b, 102c, as described in the foregoing, between the use state and the collapsed state of the collapsible tent 100. The collapsible tent further comprises a foldable frame 108 which may be attached to the foldable base and be configured to be folded with the folding of the foldable base 102 as also described in the foregoing.

What is further illustrated in Figure 9, and applicable to all embodiments disclosed herein is that the collapsible tent 100 may further comprise an angle section 104 being arranged proximally of a base section 102c of the foldable base in relation to the coupling arrangement 106, optionally proximally of a third base section 102c. Proximally of is to be interpreted as at or near the proximal side of the base section 102c, the base section 102c may overlap the angle section 104 in the longitudinal direction and even extend to a limited extent proximally of the angle section 104. The extension of the base section 102c defining a base plane of the foldable base 102 when the collapsible tent 100 is in the use state, as illustrated in Figure 9. The base plane is to be interpreted as the general plane in which the foldable base 102 is arranged when in the use state. The angle section is arranged at an angle in relation to the base section 102c, preferably the third base section 102c. The angle section 104 is optionally in a fixed angular relationship with the base section 102c and may be arranged perpendicularly thereto. Other angular relationships are however also possible, for instance between 50° and 120° is possible. The angle section 104 may form a support for the coupling arrangement 106, specifically for the frame member 120 to which the coupling arrangement 106 may be pivotably attached. Additionally, the angle section 104 may form a headrest and a stable divider which separates the interior of the collapsible tent 100 from the coupling arrangement 106.

Further illustrated in Figure 9 and applicable to all embodiments disclosed herein in which the collapsible tent comprises a foldable frame 108, is that the collapsible tent 100 may further comprise a frame tensioning arrangement 158 configured to erect at least a proximal frame member 144 when the collapsible tent 100 is in the use state. The frame tensioning arrangement 158 may as is shown comprise an elongate tensioning member 160 connected between the angle section 104 and each proximal frame member 144. Optionally is one securing device 162, such as a clamp, included for each elongate tensioning member 160. It is however also conceivable that the elongate member 160 for each proximal frame member 144 is joined into one elongate tensioning member, allowing the user to tension more than one proximal frame member 144 with each elongate tensioning member 160. Accordingly, each proximal frame member 144 may thus be tensioned simultaneously by a user applying a suitable pulling force to the respective elongate member 160, thus ensuring that the tent canopy (not shown in Figure 9) is correctly arranged.

As is further shown and also applicable to all embodiments disclosed herein in which the collapsible tent comprises a foldable frame 108, is that the collapsible tent 100 may further comprise a second frame tensioning arrangement 164 configured to erect at least a distal frame member 142 when the collapsible tent 100 is in the use state. The second frame tensioning arrangement 164 may be arranged such that it raises each distal frame member 142 when the first base section 102a is brough into the use state, i.e. the state shown in Figure 9. The second frame tensioning arrangement 164 may comprise a second elongate member attached at either side of the distal frame member 142, such as a strap, that is configured to provide the desired tension to keep the distal frame member 142 in the desired orientation. The length of each elongate member of each second frame tensioning arrangement 164 may further be adjustable, in order to adjust the position of the distal frame member 142. In another embodiment, the second frame tensioning arrangement 164, specifically the elongate members thereof, may be of a fixed length.

The distal frame member 142 may be erected and brought into a predetermined angular relationship with the base 102 when the base 102 / the collapsible tent 100 is in the use state.

In Figures 10 and 11 the collapsible tent 100 shown in two different side views being rotated 90° and in which the collapsible tent is arranged in the collapsed state. As illustrated in Figures 10 and 11, and applicable to each embodiment disclosed herein, the collapsible tent 100 may comprise at least one pair of wheels 166, 168. Each pair of wheels 166, 168 may be arranged on a second side 100b of the collapsible tent 100 opposite the first 100a side on which the coupling arrangement 106 is arranged, i.e. such that the collapsible tent 100 can be transported on the ground with the coupling arrangement 106 facing upwards when in the stowed position.

A first pair of wheels 166 is optionally arranged on the third base section 102c, i.e. the proximal base section 102c. The first pair of wheels 166 being arranged such that the first pair of wheels 166 can rotate around an axis being parallel with a lateral direction of the collapsible tent 100. The first pair of wheels 166 may thus facilitate transportation of the collapsible tent 100 when arranged on the ground and may further form a pivot point around which the collapsible tent 100 may pivot when connecting it to the vehicle V. The pivoting around the first pair of wheels 166 is illustrated in Figure 11, and may thus in combination with the pivoting of the coupling arrangement 106 facilitate connection of the collapsible tent 100 to the vehicle V.

The collapsible tent 100 may further comprise a second pair of wheels 168, the second pair of wheels 168 being arranged such that they can rotate around an axis being arranged at angle, optionally perpendicularly, to the lateral direction of the collapsible tent 100. One wheel of the second pair of wheels 168 may be arranged on the third base section 102c and one wheel arranged on the second base section 102b, both being arranged at the same lateral side of the collapsible tent 100. The user can thus lift the collapsible tent 100 on the opposite lateral side to the side where the second pair of wheels 168 is arranged and rely on the second pair of wheels 168 for facilitating moving the collapsible tent 100 in the lateral direction on the ground. I.e., the second pair of wheels 168 may function as a pivot point around which the collapsible tent 100 may pivot and thus support a large portion of the weight of the collapsible tent 100 when the user transports the collapsible tent 100 on the ground, thus facilitating this process.

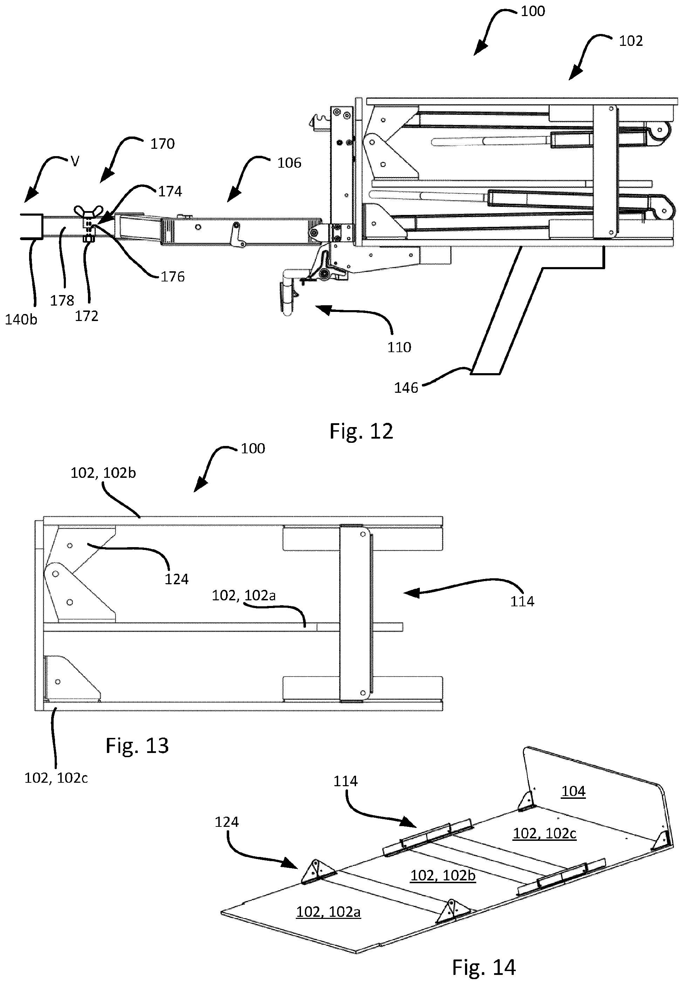

Figure 12 discloses a side view of the collapsible tent 100 in the collapsed and lowered state while still being connected to a vehicle V. In Figure 12, the collapsible tent 100 comprises a connector 170 configured to connect the coupling arrangement 106 to the vehicle in a pivoting movement of the coupling arrangement 100 and such that the relative orientation of the coupling arrangement 106 and the vehicle is fixed.

The connector 170 in Figure 12 further comprises a releasable hitch adapter 178 being configured to support the collapsible tent 100 on a hitch receiver 140b of the vehicle V such that the orientation of the coupling arrangement 106 in relation to the hitch receiver 140b is fixed. The hitch adapter 178 may comprises a tow ball and thus be configured to connect to a connector 170 in the form of a clamp connector 170 as illustrated in e.g. Figure 1. Alternatively, as illustrated in Figure 12, the coupling arrangement 106 and the hitch adapter 178 may comprise a mutual connection interface 174 being configured for connection of the coupling arrangement 106 to the vehicle V in a pivoting movement. Essentially, when the hitch adapter 178 is attached to the vehicle V, it may be interpreted as a part of the vehicle V and thus facilitate connection of the coupling arrangement 106 to the vehicle V by a pivoting movement. As illustrated in Figure 12, the connection interface 174 optionally comprises an abutment surface 176 which forms a stop for the pivoting movement of the coupling arrangement 106 towards the hitch adapter 178. The abutment surface 176 may be horizontal as illustrated in Figure 12 and form part of a stepped profile having a lower lip protruding on the hitch adapter 178 towards the coupling arrangement 106 and an upper lip on the coupling arrangement protruding towards the hitch adapter 178 being in mutual engagement when the coupling arrangement 106 is connected to the hitch adapter 178.

The abutment surface 176 may have other shapes as well, for instance it may be formed by an inclined and/or curved surface forming a corresponding connection interface 174 between the coupling arrangement 106 and the hitch adapter 178. The inclined and/or curved abutment surface 176 being formed such that the coupling arrangement 106 abuts against the hitch adapter 178 when the coupling arrangement 106 is pivoted towards the hitch adapter 178 around the coupling arrangement pivot axis A1 as described in the foregoing.

A fastener 172 may further be provided for securing the coupling arrangement 106 to the hitch adapter 178, for instance in the form of one or more bolts and corresponding nuts.

The side of the hitch adapter 178 arranged in the hitch receiver 140b may take any suitable shape known in the art for attachment in a hitch receiver and will thus not be explained in further detail herein.

In Figures 13 and 14 is a collapsible tent 100 shown in a side view in the collapsed state and in a perspective view in the use state respectively. The collapsible tent 100 being configured to be mounted to a vehicle V. The collapsible tent 100 being foldable between a use state and a collapsed state, as described in the foregoing. The collapsible tent 100 comprises a foldable base 102 for forming a floor of the tent, the foldable base comprises at least a first base section 102a, a second base section 102b and a third base section 102c. At least the first base section 102a and the second base section 102b are pivotable in relation to the adjacent sections 102a, 102b, 102c between the use state and the collapsed state of the collapsible tent 100. Optionally, the collapsible tent 100 further comprises a foldable frame 108 which may be attached to the foldable base and be configured to be folded with the folding of the foldable base 102 as described in conjunction with Figures 3a-3d in the foregoing.

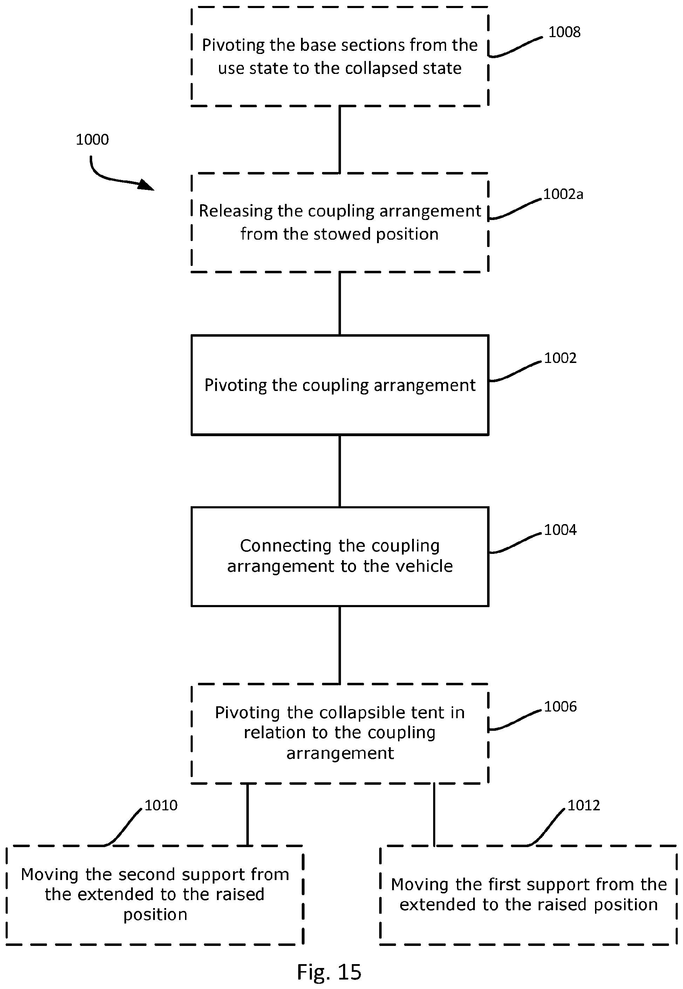

In Figure 15 is a schematic flowchart of a method 1000 for mounting a collapsible tent 100 on a vehicle shown. The collapsible tent 100 comprising a coupling arrangement 106 as described in the foregoing being pivotable in relation to a base 102 of the collapsible tent 100. The coupling arrangement 106 being configured for connection and release of the collapsible tent 100 from the vehicle V by a pivoting movement of the coupling arrangement 106. The method 1000 comprising the steps of:
- pivoting 1002 the coupling arrangement 106 in relation to the foldable base 102,
- connecting 1004 the coupling arrangement 106 to the vehicle such that a relative orientation of the coupling arrangement 106 and the vehicle V is fixed.

As explained in the foregoing, the collapsible tent 100 may in certain embodiments further comprise a locking mechanism 110 for locking the coupling arrangement 106 in a stowed position in relation to the foldable base 102. Upon actuation of the locking mechanism 110 can the coupling arrangement 106 be released and pivoted from the stowed position to an extended position. The method 1000 may in such embodiments further comprise:
- releasing the coupling arrangement 106 from the stowed position by actuating the locking mechanism 110.

The method 1000 may further comprise, after the coupling arrangement 106 is connected to the vehicle such that the orientation of the coupling arrangement 106 and the vehicle is fixed, the step of:
- pivoting 1006 the collapsible tent 100 in relation to the coupling arrangement 106 until the coupling arrangement 106 is in a stowed position and the collapsible tent 100 is in the raised position in relation to the vehicle V. Optionally, the locking mechanism 110 locks the collapsible tent 100 in place when it reaches the raised position in relation to the vehicle V and the coupling arrangement 106 is in the stowed position.

The method 1000 may further comprise pivoting 1008 the base sections 102a, 102b, 102c from the use state to the collapsed state of the collapsible tent 100, particularly the first base section 102a and the second base section 102b and a fourth base section 102d, before the step of pivoting 1006 the collapsible tent 100 in relation to the coupling arrangement 106.

Further, when the collapsible tent 100 is in the collapsed state and in the lowered position in relation to the vehicle V and the coupling arrangement 106 as is illustrated in Figures 6a, 6b and 6c, the method 1000 may comprise moving 1010 the second support 150 from an extended position to a raised position. Optionally, a pair of second supports 146 arranged on opposite lateral sides of the collapsible tent 100 are moved from the extended to the raised position.

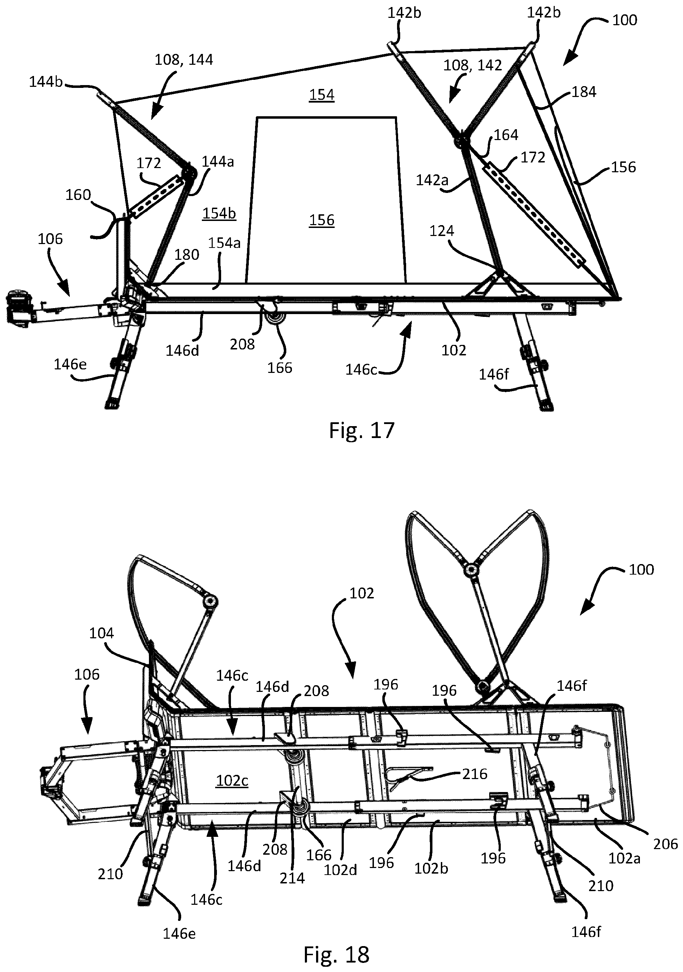

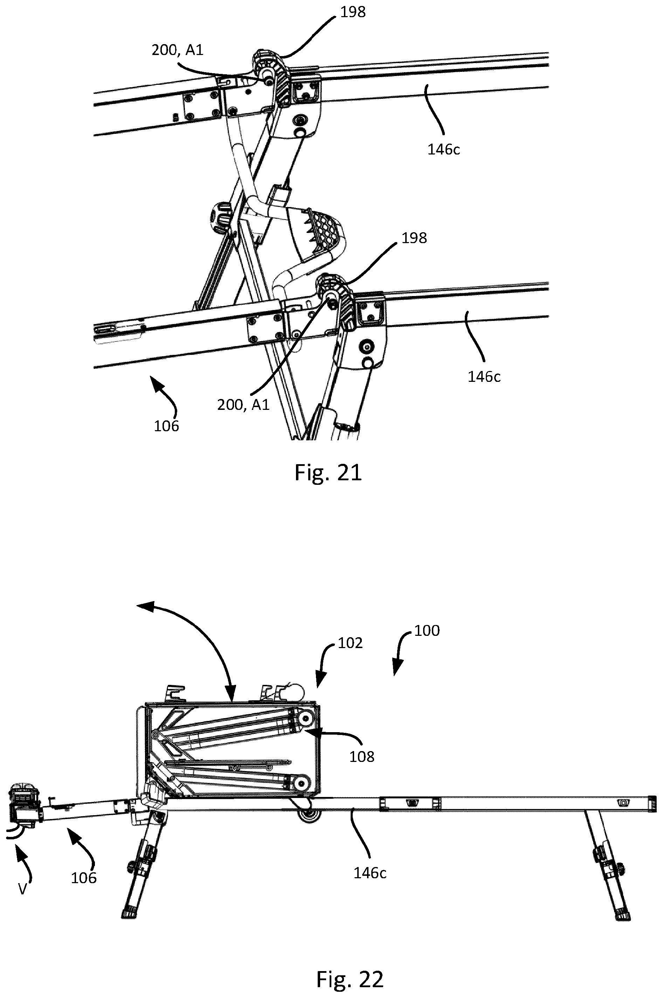

Moreover, as is illustrated in Figures 5a and 5b, the method 1000 may comprise, when the collapsible tent 100 is in or near the raised position, moving 1012 the first support 146 from an extended position to a raised position. Optionally, a pair of first supports 146 arranged on opposite lateral sides of the collapsible tent 100 are moved from the extended to the raised position. Optionally, the method 1000 may comprise detaching a support 146c (shown e.g. in Figures 17 and 22) from the foldable base 102 and optionally arranging the support 146c on attachment members 196 on the foldable base 102.

Moreover, the method 1000 described in the foregoing may naturally be performed in the opposite order for unmounting the collapsible tent 100 from a vehicle V.

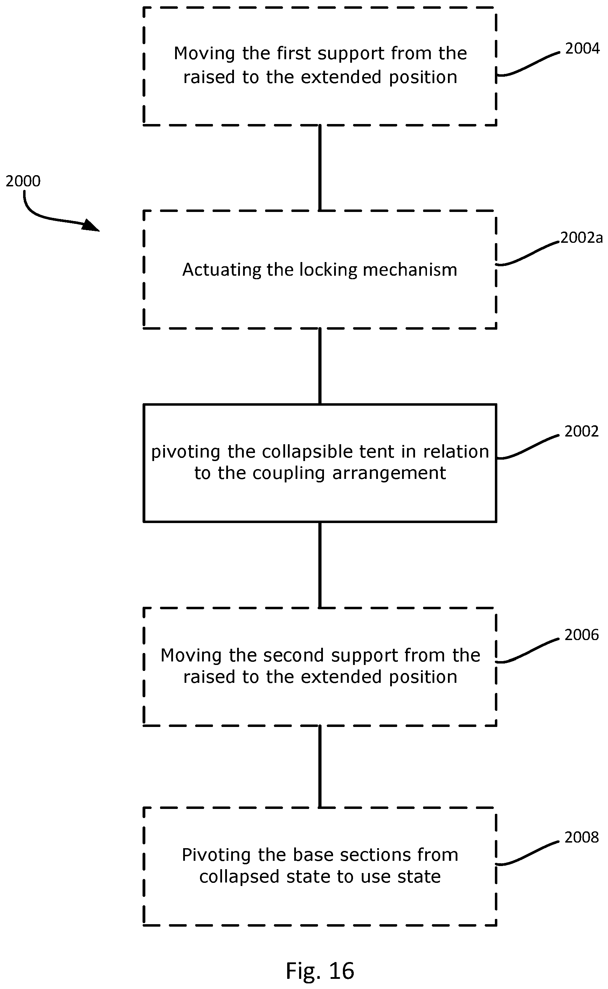

In Figure 16 is a schematic flowchart shown of a method 2000 for transferring a collapsible tent 100 from a raised position to a lowered position in the collapsed state of the collapsible tent when the tent is mounted on a vehicle V. The method 2000 comprising the step of:
- pivoting 2002 the collapsible tent 100 in relation to the coupling arrangement 106 around a coupling arrangement pivot axis A1 from the raised position to the lowered position of the collapsible tent 100.

In certain embodiment disclosed herein the collapsible tent 100 further comprises a locking mechanism 110 for locking the coupling arrangement 106 in a stowed position in relation to the foldable base 102, as described in the foregoing. Upon actuation of the locking mechanism 110 can the coupling arrangement 106 be released and pivoted from the stowed position to an extended position. In such embodiments, the method 2000 may further comprise:
- actuating 2002a the locking mechanism to release the coupling arrangement 100 from the stowed position and the collapsible tent 100 from the raised position.

The method 2000 may further comprise pivoting the base sections 102a, 102b, 102c from the collapsed state to the use state of the collapsible tent 100, particularly the first base section 102a and the second base section 102b and optionally a fourth base section 102d, after the collapsed tent has reached the lowered position.

In embodiments disclosed herein in which the locking mechanism 110 is arranged such that it is actuatable by the foot of a user, i.e. on the first side 100a of the collapsible tent 100 which forms an underside of the collapsible tent when the collapsible tent 100 is mounted on a vehicle V in the raised position and in the collapsed state, the method 2000 may further comprise:
- actuating 2002a the locking mechanism 110 to release the collapsible tent 100 from the raised position by pressing the locking mechanism 110 by a foot of the user. The user can thus have both hands free to pivot the collapsible tent 100 in relation to the coupling arrangement 106 from the raised to the lowered position in relation to the vehicle V.

Moreover, as is illustrated in Figures 5a and 5b, the method 2000 may comprise, when the collapsible tent 100 is in or near the raised position, moving 2004 the first support 146 from a raised position to an extended position. Optionally, a pair of first supports 146 arranged on opposite lateral sides of the collapsible tent 100 are moved from the raised to the extended position. Optionally, the first support 146 is moved into the extended position before the locking mechanism 110 is actuated. Optionally, the method 1000 may comprise moving 1004 a support 146c to position to where one end thereof is attached to the collapsible tent 100 such said end of the at least one support 146c is supported by the collapsible tent 100. Optionally, the method 1000 may comprise moving 1004 the support 146c to a position where a connecting member 198 is in engagement with a coupling arrangement shaft 200. The coupling arrangement shaft 200 may further be concentric with the coupling arrangement pivot axis A1. Additionally, the method 1000 may comprise extending the length of a first support portion 146d of the support 146c telescopically until it extends at least partially under each base section 102a, 120b, 102c, 102d of the foldable base 102.

Further, once the collapsible tent 100 is in the lowered position in relation to the vehicle V and the coupling arrangement 106 as is illustrated in Figures 6a, 6b and 6c, the method 2000 may comprise moving 2006 a second support 150 from a raised position to an extended position. Optionally, a pair of second supports 146 arranged on opposite lateral sides of the collapsible tent 100 are moved from the raised to the extended position.

Figure 17 shows a side view of a collapsible tent 100 according to an aspect of the present disclosure. Unless stated otherwise, any feature described in the following is applicable and combinable with all other embodiments disclosed herein and vice versa.

The collapsible tent 100 is configured to be mounted to a vehicle and is foldable between a use state and a collapsed state. The tent 100 is illustrated in the use state in Figure 17. As illustrated in Figure 17 and described in the foregoing, the collapsible tent 100 may comprise a coupling arrangement 106 for mounting to the vehicle. The coupling arrangement 106 will thus not be described further in relation to the following embodiments. The collapsible tent 100 may further comprise a foldable frame 108 foldable with the folding of the collapsible tent 100 between the use state and the collapsed state, the foldable frame 108 is configured to support a canopy 154 from an external side thereof. Accordingly, the canopy 154 can be formed without any openings for the foldable frame 154 reducing the risk of water ingress. Moreover, as the foldable frame 108 is arranged externally of the canopy 154, a person staying inside of the collapsible tent 100 will at all times during intended use have a layer of canopy 154 between themselves and the foldable frame 108, increasing user comfort and reducing risk of injury.

The canopy 154 may accordingly form a sealable enclosure, in that no openings are needed for the foldable frame 108. The canopy 154 may further comprise a bottom portion 154a forming a floor of the collapsible tent 100 and being arranged against a base of 102 of the collapsible tent 100. A top portion 154b is further provided being attached to the bottom portion 154a, the top portion 154b forming walls and roof of the collapsible tent 100. The bottom portion 154a may be manufactured from a different material than that of the top portion 154b. For instance, the bottom portion 154a may be made of a more durable material to make it withstand the wear against the base 102 of the collapsible tent 100.

The foldable frame 108 is configured to remain attached to the base 102, by means of the hinges 124, 180, of the collapsible tent 100 during transition between the use state and the collapsed state of the collapsible tent 100. The user will thus not have to remove the foldable frame 108 when transferring the collapsible tent 100 between the use state and the collapsed state and vice versa. The foldable frame 108 is configured to fit inside the space S formed when the collapsible tent 100 is in the collapsed state.

As is further illustrated, the foldable frame 108 may comprise a proximal frame member 144, proximal is to be interpreted as in relation to the coupling arrangement 106. Further, the foldable frame 108 may comprise a distal frame member 142. The collapsible tent 100 may comprise an elongate tensioning member 160 for tensioning and raising the proximal frame member 144 of the foldable frame 108 and holding it in the raised/erected position. The elongate tensioning member 160 is described in the foregoing in the present disclosure, which is equally applicable to the illustrated embodiment. One elongate tensioning member 160 may be provided at each lateral side of the collapsible tent 100.

The collapsible tent 100 may comprise an elongate tensioning member 164 for tensioning and raising the distal frame member 142 of the foldable frame 108 and holding it in the raised/erected position. The elongate tensioning member 164 is described in the foregoing, which is equally applicable to the illustrated embodiment. One elongate tensioning member 164 may be provided at each lateral side of the collapsible tent 100. In a preferred embodiment, the elongate tensioning member 164 for the distal frame member 142 is of a fixed length such that when a distal base section 102a is brought into the use state, the distal frame member 142 is simultaneously raised/erected.

Each elongate tensioning member 160, 164 may be arranged extending through a corresponding slot 172 in the tent canopy 154. Accordingly, when tension is applied by the elongate tensioning member respective 160, 164 to the foldable frame 108 and the collapsible tent 100 is in the use state, the elongate tensioning member 160, 164 supports at least a portion of the tent canopy 154. The canopy 154 is thus held up and the intended shape is maintained by the tensioning of the tensioning members 160, 164. Each slot 172 may be formed as a tunnel in the external material of the canopy 154. Further, each slot 172 may be internally lined with, or formed from, a wear resistant and/or friction reducing material to avoid wear from the elongate tensioning members 160, 164.

Moreover, each frame member 144, 142 preferably comprises at each lateral side thereof a leg portion 142a, 144a. The respective leg portions 142a, 144a of each frame member 142, 144 being arranged laterally on the foldable base 102 and forms the lower part of each frame member 142, 144.

Each frame member 142, 144 further comprises at least one interconnecting element 142b, 144b connecting said lateral leg portions 142a, 144a on each frame member 142, 144. The respective interconnecting element 142b, 144b is configured to support the canopy 154. Each interconnecting element 142b, 144b is pivotable in relation the respective leg portion 142a, 144a on each frame member 142, 144.

As is illustrated in Figure 17, the distal frame member 142 is provided with two interconnecting elements 142b. This distributes the suspension of the canopy 154 by the distal frame member 142 longitudinally, which allows a greater internal volume to be formed inside of the canopy 154. While only the distal frame member 142 is illustrated as having two connecting elements 142, it is to be understood that also the proximal frame member 144 may be provided with two or more connecting elements 144b.

As will be elaborated further on below, at least one canopy supporting element 186 is provided for forming a connection between each frame member 142, 144 and the canopy 154. Preferably, between each connecting element 142b, 144b and the canopy 154.

Each interconnecting element 142b, 144b and each leg portion 142a, 144a is preferably made from a metallic material such as aluminium. Alternatively, a plastic or composite material could be used. Preferably, an extrusion manufacturing process is used for manufacturing each interconnecting element 142b, 144b and/or each leg portion 142a, 144a.

An elastic element 184 may further be provided for forming a tensioning force to the at least one interconnecting element 142b, 144b acting in the direction towards the collapsed state of the associated frame member 142, 144 when the collapsible tent 100 is in the use state. Accordingly, the elastic element 184 will facilitate folding the associated frame member 142, 144 with the folding of the collapsible tent 100. An elastic element 184 may be arranged at each lateral side of the collapsible tent 100 for even force distribution to the associated interconnecting element 142b.

The canopy 154 may at least at proximal and/or distal ends thereof be provided with attachment means, preferably keder fasteners, for securing the canopy 154 to the foldable base 102. The canopy 154 is preferably attached to the distal base section 102a at a distal end thereof. The canopy 154 may further be attached to the proximal base section 102c at a proximal end thereof

The canopy 154 further comprises an opening 156 facing in the lateral direction of the collapsible tent, the opening 156 may be at least partially connected to the remainder of the canopy 154 for instance by means of zip closure. Naturally, both lateral sides of the collapsible tent 100 may be provided with an opening 156. Additionally, a second opening 156 may be provided at a distal side of the canopy 154 and facing in the longitudinal direction of the collapsible tent 100.

Figure 18 shows the collapsible tent 100 from a bottom view.

As is illustrated, the collapsible tent 100 may comprise a foldable base 102 for forming a floor of the tent 100. The foldable base 102 comprises at least two base sections 102a, 102b, 102c, 102d, preferably four base sections 102a, 102b, 102c, 102d. At least two base sections 102b, 102c, 102d being pivotable in relation to each other between the use state and the collapsed state. In Figure 18, three base sections 102b, 102c, 102d are pivotable in relation to each other. As illustrated, a fourth base section 102d may be provided to the foldable base 102. The fourth base section 102d being hingedly connected to adjacent base sections 102c, 102b, i.e. to the proximal base section 102c and the second base section 102b. The fourth base section 102d is arranged intermediately between the proximal base section 102c and the second base section 102b.

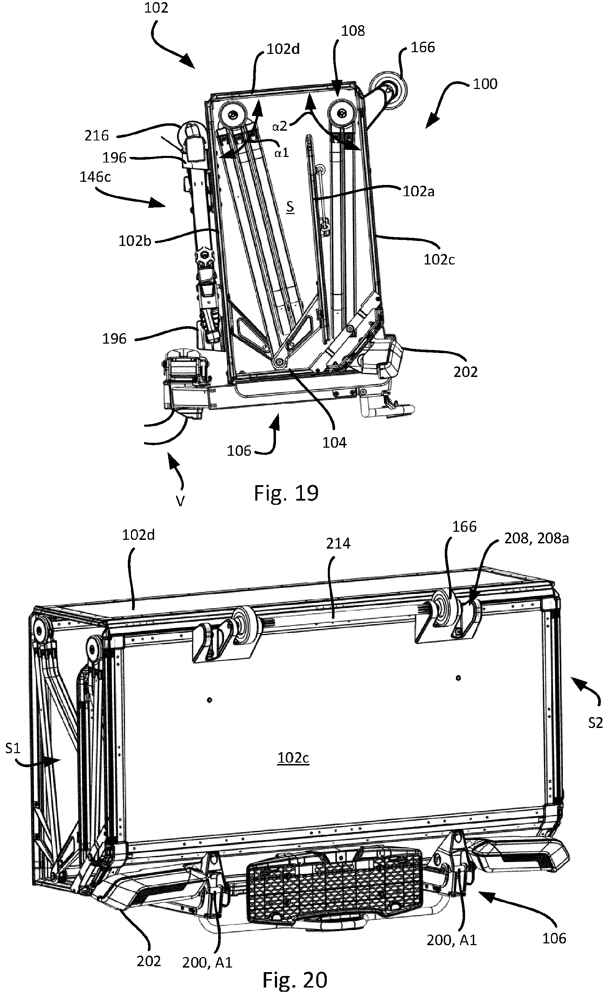

The fourth base section 102d may be arranged oppositely to the angle section 104 when the collapsible tent 100 is in the collapsed state, as illustrated in Figure 19. The fourth base section 102d may be dimensioned correspondingly to the angle section 104, whereby the base 102 when in the collapsed state of the collapsible tent 100 may be provided with a substantially rectangular outline when observed from the side.

Further shown in Figure 18 is how the collapsible tent 100 may further comprise at least one support 146c for supporting the collapsible tent 100. In Figure 18, two supports 146c are arranged side by side with longitudinal extension along the base 102 of the collapsible tent 100. While two supports 146c provide a sufficiently stable platform for the collapsible tent 100, more than two supports 146c may be naturally also be provided.

Each support 146c comprises a first support portion 146d being configured to be arranged such that it extends in parallel with the extension of the foldable base 102 when the collapsible tent 100 is in the use state and such that it extends below at least two adjacent base sections 102a, 102b, 102c, 102d. The length of the first support portion 146d can be adjusted, allowing each support 146c to be more easily handled when not attached to the base 102. The length of the first support portion 146d is preferably telescopically adjustable.

The length of the first support portion 146d may be adjustable between a minimum length being less than a lateral width of the base 102 and a maximum length extending at least partially under each base section 102a, 102b, 102c, 102d of the base 102. The first support portion 146d should preferably at its maximum length extend as shown in Figure 18, from the coupling arrangement 106 and longitudinally past half the longitudinal length of the distal base section 102a.

Each support 146c is optionally configured to be attached to the collapsible tent 100 in a use position and in a stowed position, the stowed position being illustrated in Figure 19.

Accordingly, the collapsible tent 100 may further comprise attachment members 196 for securing each support 146c to the collapsible tent 100. The attachment members 196 are arranged on the second base section 102b and may be formed as hooks into which each support 146c can be arranged. A strap 216 may further be provided being configured to secure the at least one support 146c in the attachment members 196. The attachment members 196 are further positioned such that they are configured to align the first support portion 146d of each support 146c when the support 146c in the use position, as shown in Figure 18 by being arranged at opposite sides of the first support portion 146d.

The collapsible tent 100 may further comprise a use state locking element 206. The use state locking element 206 is configured to lock the foldable base 102 against the at least one support 146c in the use state of the foldable base 102. The use state locking element 206 may comprise a spring biased pin configured to cooperate with an opening in each support 146c at a distal end thereof. The use state locking element 206 is optionally arranged on the distal base section 102a and may be configured to lock the distal base section 102a against each support 146c when the distal base section 102c is brought into the use state as shown in Figure 18 without user interaction.

Each support 146c further comprises a first leg 146e and a second leg 146f arranged at opposite ends of the support 146c, the length of the first leg 146e and the second leg 146f being adjustable to facilitate arranging of the collapsible tent 100 on uneven or inclined ground. Moreover, at least one of the first and second leg 146e, 146f of the may be foldable between the position illustrated in Figure 18 and a position essentially parallel with the first support portion 146d for stowing the support 146c.

A supporting brace 210 may further be provided interconnecting each support 146c, preferably each leg 146e, 146f thereof. As illustrated, one proximal supporting brace 210 and one distal supporting brace 210 may be provided extending laterally between the respective proximal and distal legs 146e, 146f on each support 146c.

Figure 19 shows a side view of the collapsible tent 100 in the collapsed state and in a raised position in relation to the coupling arrangement 106, as it would be arranged when transported by a vehicle V.

As illustrated in Figure 19, the foldable base 102 forms a circumference around the space S when folded into the collapsed state of the collapsible tent 100. The fourth base section 102d may as mentioned be arranged opposite the angle section 104, thus forming an upper base section 102d on the second side 100b of the collapsible tent 1000 and essentially a roof for preventing water ingress into the space S when the collapsible tent 100 is transported mounted behind a vehicle.

The angle section 104 is arranged at an angle in relation to an adjacent base section 102c and may be either formed separately or, as illustrated in Figure 19, be integrally formed with the proximal base section 102c. At least the distal base section 102a of the foldable base 102 is configured to be arranged inside the space S defined by the circumference formed by the angle section 104 and the remaining base sections 102c, 102b, 102d of the foldable base 102 when the collapsible tent 100 is in the collapsed state. Moreover and as mentioned in the foregoing, the space S may be further configured to hold at least the canopy 154 (not shown) and the foldable frame 108.

Each of at least two intermediate base sections 102b, 102d, i.e. the third base section 102b and the fourth base section 102d, are arranged, in the collapsed state of the collapsible tent (100), end-to-end and pivoted in relation to a respective proximal base section 102c, 102d with a base section pivot angle α1, α2. In Figure 19, the base section pivot angle α1, α2 is between 70° and 110°, preferably approximately 90°, giving a an essentially rectangular outline to the circumference to the collapsible tent 100 when in the collapsed state. It also considered that the base section pivot angle α1 between the second base section 102b and the fourth base section 102d may be different from the base section pivot angle α2 between the fourth base section 102d and the third base section 102c.

Figure 20 shows a perspective rear view of the collapsible tent 100 in the collapsed state thereof.

As elaborated on in the foregoing, a first pair of wheels 166 may be arranged on the third base section 102c, i.e. the proximal base section 102c. The first pair of wheels 166 being arranged such that the first pair of wheels 166 can rotate around an axis being parallel with a lateral direction of the collapsible tent 100. The first pair of wheels 166 may thus facilitate transportation of the collapsible tent 100 on the ground and may further form a pivot point around which the collapsible tent 100 may pivot when connecting it to the vehicle V when not having been arranged on the support 146c. The pivoting around the first pair of wheels 166 is illustrated in Figure 11, and may thus in combination with the pivoting of the coupling arrangement 106 facilitate connection of the collapsible tent 100 to the vehicle V.

Moreover, for facilitating transfer of the collapsible tent 100 between the raised position and a lowered position in relation to the coupling arrangement 106, a handle 214 may be provided. The handle 214 may as shown be arranged on the third base section 214 and attached to a wheel attachment 208 for attaching the first pair of wheels 166. This positioning of the handle 214 provides the largest possible leverage between the coupling arrangement pivot axis A1 and the handle 214, reducing the weight for user.

The wheel attachment 208 may further comprise grooves 208a configured to receive a respective support 146c, specifically a first support portion 146d thereof.

Moreover, as illustrated in Figure 20 and Figure 21, the collapsible tent 100 comprises a coupling arrangement shaft 200. Figure 21 shows a detail view of the connection of the at least one support 146c to the collapsible tent 100. The foldable base 102 is omitted for clarity. The at least one support 146c is optionally attachable to the coupling arrangement shaft 200 when the collapsible tent 100 is in the raised position as in Figure 20. Accordingly, the at least one support 146c may comprise a connection member 198 configured to be attached to the collapsible tent 100 such that one end of the at least one support 146c is supported by the collapsible tent 100. Accordingly, the at least one support 146c may be attached to the collapsible tent 100 while the tent 100 is still attached to the vehicle V. The legs 146e, 146f of the at least one support 146c can subsequently be adjusted to provide a level support 146c for the foldable base 102 before the collapsible tent 100 is brought from the raised to the lowered position as further illustrated in Figure 22.

The coupling arrangement shaft 200 may further be concentric with the coupling arrangement pivot axis A1.

Accordingly, as is illustrated by the arrow in Figure 22, the collapsible tent 100 or specifically the foldable base 102 and associated components such as the foldable frame 108 and the canopy 154 etc may be moved between a raised position and a lowered position in relation to the coupling arrangement 106 while being attached to a vehicle V and while attached to the at least one support 146c. The user will thus only have to lift at portion of the weight of the collapsible tent 100 while it is being brought from the raised position and collapsed state and into the lowered position and the use state and vice versa.

The connection member 198 of each support 146c may be formed as a hook for hanging on the coupling arrangement shaft 200.

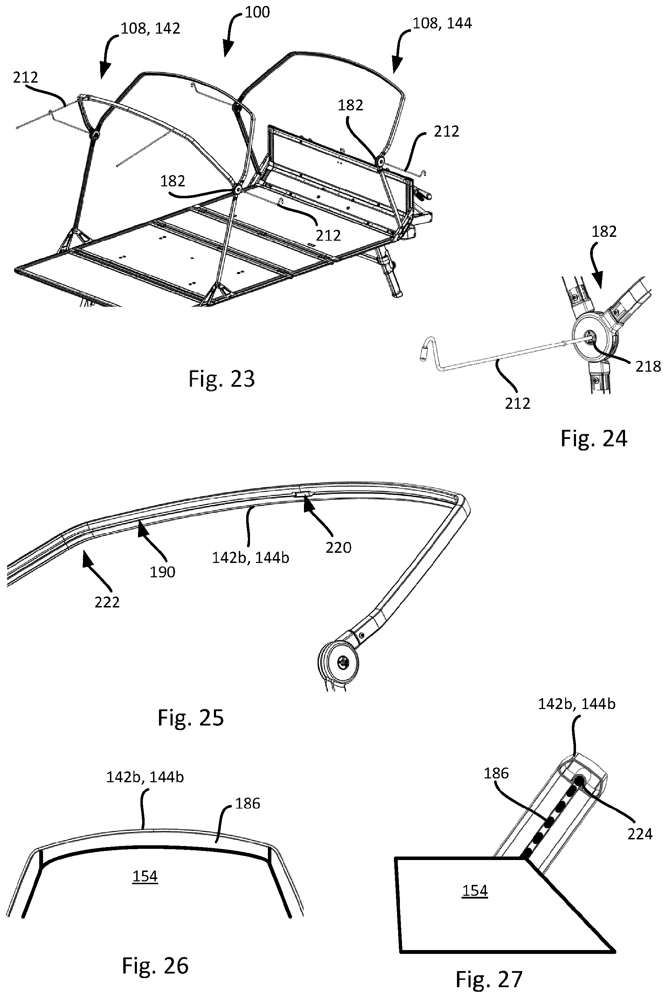

Figure 23 shows a perspective view of an embodiment of the collapsible tent 100 being configured for use with a rain fly (not shown). The collapsible tent 100 is configured for attachment of the rain fly externally of the foldable frame 108, which by means of the foldable frame being externally arranged of the canopy 154 creates an air passage between the rain fly and canopy 154. For supporting the rain fly around the periphery thereof are a plurality of rain fly support rods 212 provided attached to the foldable frame 108.

As illustrated in Figure 23, and applicable to all embodiments disclosed herein, the foldable frame 108 may on at least one frame member 142, 144 optionally comprise a folding hinge 182 between each first and second leg portion 142a, 144a and each respective interconnecting element 142b, 144b.

Additionally, as shown in the detail view of a folding hinge 182 in Figure 24, one or more folding hinges 182 of the collapsible tent 100 may comprise an attachment insert 218 having a cavity into which a rain fly support rod 212 can be attached. The attachment insert 218 may be formed out of a metallic material, such as stainless steel or aluminum. The insert 218 may be threaded into a corresponding threaded opening in the folding hinge or attached by other means thereto such as welding etc as realized by a person skilled in the art.

In the following will reference be made to Figures 25, 26 and 27. Figure 25 shows a detail view of an interconnecting element 142b, 144b. Figure 26 shows a front detail view of a connecting element 142b, 144b and an associated canopy supporting element 186. Figure 27 shows a cross-sectioned view of an interconnecting element 142b, 144b and an canopy supporting element 186 connected to the canopy 154.

Each interconnecting element 142b, 144b comprises a keder rail 190, essentially formed by a circular groove along the length of the interconnecting element 142b, 144b. A canopy supporting element 186 is attached to the foldable frame 108, particularly to the interconnecting element 142b, 144b, by means of a keder 224. Moreover, a keder rail opening 220 may be provided facilitating insertion and removal of the canopy supporting element 186 into/from the interconnecting element 142b, 144b.

The canopy supporting element 186 is preferably formed by a pliable material and having an extension in the direction of the extension of the interconnecting element 142b, 144b of the foldable frame 108. In Figure 26, it is illustrated how one canopy supporting element 186 with lateral extension across essentially the entire roof of the canopy 154 is attached to one interconnecting element 142b, 144b. As such, the force from suspending the canopy 154 to the interconnecting element 142b, 144b is distributed over a large lateral width which provides a strong and visually appealing suspension of the canopy 154. It is however to be realized that more than one canopy supporting element 186 may be provided to each interconnecting element 142b, 144b. For instance, two canopy supporting elements 186 may be provided each with a lateral extension along the length of the associated interconnecting element 142b, 144b.

The canopy supporting element 186 may be formed from a textile material, such as a mesh material. The keder 224 may be formed from an insert, such a plastic insert, or from another similar material. Accordingly, the keder 224 cannot unintentionally be pulled through the keder rail 190 during intended use of the collapsible tent 100.

The at least one canopy supporting element 186 may be sewn to the canopy 154 and thus form an integral part thereof. It is also conceivable that the canopy supporting element 186 may be connected to the canopy 154 for instance by means of zip fastener.

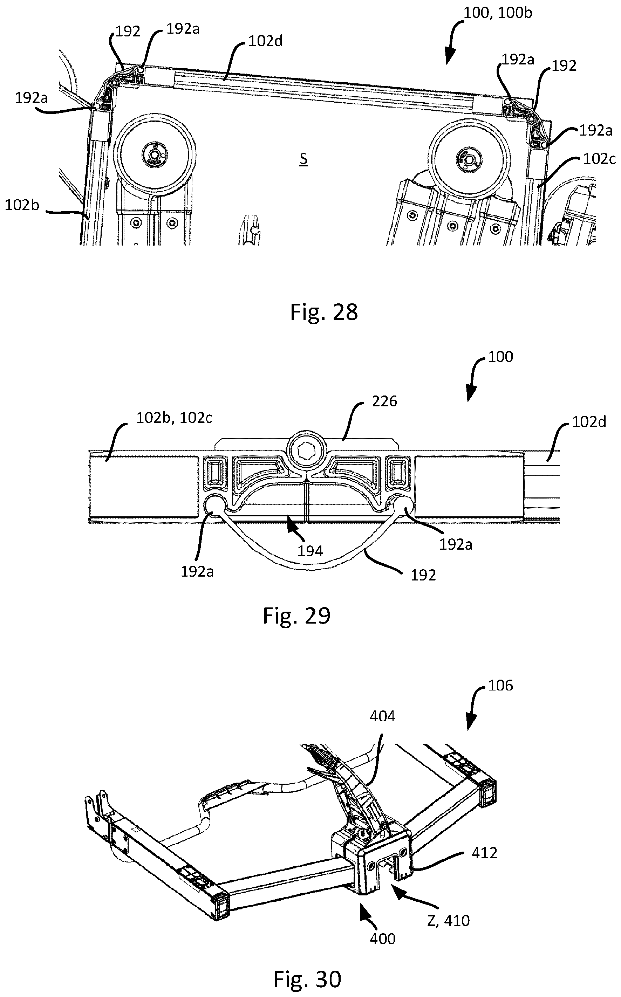

Turning now to Figures 28 and 29, which shows a side detail view of sealing elements 192 on a collapsible tent 100 in a collapsed state and in a use state respectively. For preventing water ingress into the space S inside the foldable base 200, at least one base section 102d is optionally connected to a respective adjacent base section 102b, 102c on either side by a respective sealing element 192. The sealing element 192 may be formed by a rubber or plastic element 192.

The fourth base section 102d is as mentioned arranged as an upper base section when the collapsible tent 100 is arranged in the collapsed state and in the raised position in relation to the coupling arrangement 106. Accordingly, by being attached to adjacent base sections 102b, 102c by a sealing element 192, the risk of water running down into the space S is reduced.

As illustrated in Figure 29, a cavity 194 may be provided with lateral extension in an interface on the exterior side between the fourth base section 102d and said adjacent base section 102b, 102c. The cavity 194 is configured to accommodate at least a portion of the sealing element 192 when the collapsible tent 100 is in the use state. As the sealing element 192 needs to have sufficient width to extend along the radius formed when the foldable base 102 is folded into the collapsed state, and since the corresponding distance decreases when the foldable base 102 is flat and in the use state, the cavity 194 allows the sealing element 194 to be arranged therein an thus avoiding for instance the sealing element 192 being pinched between the base 102 and the support 146c.

Moreover, a base section hinge 226 is illustrated in Figure 29. The fourth base section 102d is optionally connected to each adjacent base section 102b, 102c by at least one base section hinge 226.

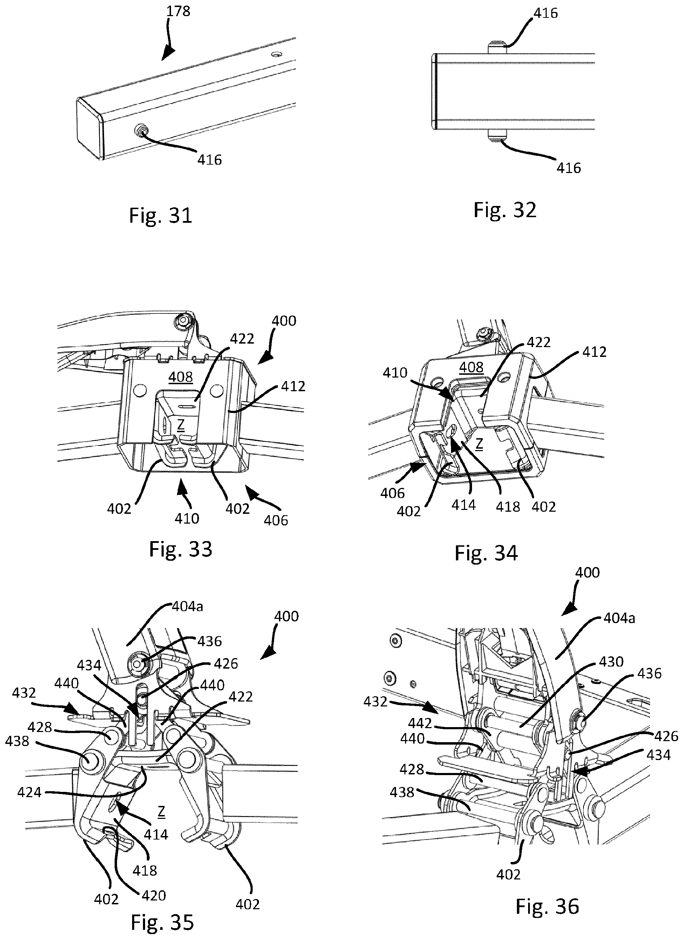

Figure 30 shows a perspective view of a quick connector 400 being arranged on a coupling arrangement 106, the quick connector 400 is intended for attachment to a corresponding hitch adapter 31 as shown in Figure 31. The quick connector 400 is applicable to all embodiments disclosed herein when the collapsible tent 100 is to be used with a vehicle V equipped with a hitch receiver 140b. The quick connector 400 is configured to be attached to a hitch adapter 178 in the shape of a square tubing which is adapted to fit in a hitch receiver 140b as illustrated in Figure 12.

It is further to be realized that the quick connector 400 is suitable for use with any type of vehicle mounted accessory such as with a rear mounted bike carrier, rear mounted cargo solutions etc.

The quick connector 400 comprises clamping mechanism 402 having clamping jaws 404 (shown in Figures 32 and 33) operatively connected to an actuator 404. The actuator may be in form of a handle operated by the user. It is however also conceivable that the actuator 404 may comprise an electric or hydraulic motor for powered movement.

The clamping jaws 402 define a clamping zone Z, which is where the hitch adapter 178 is to be arranged for allowing the clamping jaws 402 to securely clamp against the hitch adapter 178 to achieve the desired coupling. The quick connector 400 is configured for arranging of the hitch adapter 178 in the clamping zone Z by a pivoting and/or vertical movement of the quick connector 400 in relation to the hitch adapter 178. Accordingly, when the quick connector 400 is for instance mounted to a coupling arrangement 106 of collapsible tent 100, the user can couple and uncouple it to the hitch adapter 178 without having to move the collapsible tent 100 or the vehicle V.

Figures 31 and 32 shows a perspective view and a top view of a hitch adapter 178. The hitch adapter 178 is configured to be mounted in a hitch receiver, accordingly the hitch adapter 178 may be provided with a corresponding rectangular shape as is realized by a person skilled in the art.

The hitch adapter 178 comprises an engagement element 416 configured to cooperate with a corresponding engagement element 414 in the clamping jaws 402 of the quick connector 400. The engagement element 416 on the hitch adapter 178 is illustrated as lateral protrusions 416 configured to cooperate with corresponding openings 414 in the clamping jaws 402. However, the protrusion could be formed as an engagement element 414 on the clamping jaws 402 and corresponding openings be formed as engagement elements 416 on the hitch adapter 178. Moreover, more than two engagement elements 416 may be provided and on any side of the hitch adapter 178.

In the following will reference be made to Figures 33 and 34. Figure 33 shows a quick connector 400 in a closed state of the clamping jaws 402, while Figure 34 shows a quick connector 400 in an open state of the clamping jaws 402.

As shown in Figure 33, the quick connector 400 may comprise a housing 412 having a hitch adapter opening 410 extending from a downwards facing side 406 to a hitch adapter facing side 408 thereof. The opening 410 being configured to allow passage of the hitch adapter 178 therethrough.

Each clamping jaw 402 may further comprise a side engagement surface 418 for engaging a side surface of the hitch adapter 178. Preferably, when the quick connector 400 is in the closed state, the distance between the opposing side engagement surface 418 of the clamping jaws 402 is less than the corresponding distance between the side surfaces of the hitch adapter 178 whereby a pretensioning force is generated.

Moreover, each clamping jaw may comprise a bottom engagement surface 420 for engaging a bottom surface of the hitch adapter 178. The side engagement surface 418 and the bottom engagement surface 420 are preferably essentially perpendicularly arranged.

A bracket 422 may be provided, the bracket 422 forming a structural component of the quick connector 400 in relation to which the clamping jaws 402 are pivotably arranged. The bracket may further comprise an upper engagement surface 424 for engaging an upper surface of the hitch adapter 178. As illustrated in Figure 33, the clamping jaws 402 together with the bracket 422 forms an essentially rectangular clamping zone Z when the clamping jaws 402 are in the closed state. Further, engagement elements 414 may be provided in the upper engagement surface 424 and/or in the bottom engagement surface 420.

Figure 35 and 36 shows perspective views of the quick connector 400 with the housing 412 omitted for clarity, illustrating a linkage 432 of the quick connector 400. The clamping jaws 402 are pivotable between an open position and a clamping/closed position. The linkage 432 between the actuator 404 and the clamping jaws 402 is configured to translate a translatory movement of a translation shaft 426 to a rotational movement of a respective clamping jaw shaft 428. The translation shaft 426 is arranged in a track 434 guiding the translatory movement thereof. It is connected by means of linkage members 440 to convey a force to the clamping jaw shaft 428 of each clamping jaw 402 whereby rotational movement thereof is induced around a respective clamping jaw rotation shaft 438 for each clamping jaw 402. I.e., the clamping jaw rotation shaft 348 of each clamping jaw 402 forms the rotational axis of the respective clamping jaw shaft 428.

The linkage 432 may further be configured to translate a rotational movement of an actuator shaft 430 associated with an actuator handle 404a to the translatory movement of the translation shaft 426. The rotational movement of the actuator shaft 430 takes place around an actuator rotation axis 436. The actuator shaft 430 being connected by means of linkage members to the translation shaft 426, for conveying a force thereto.

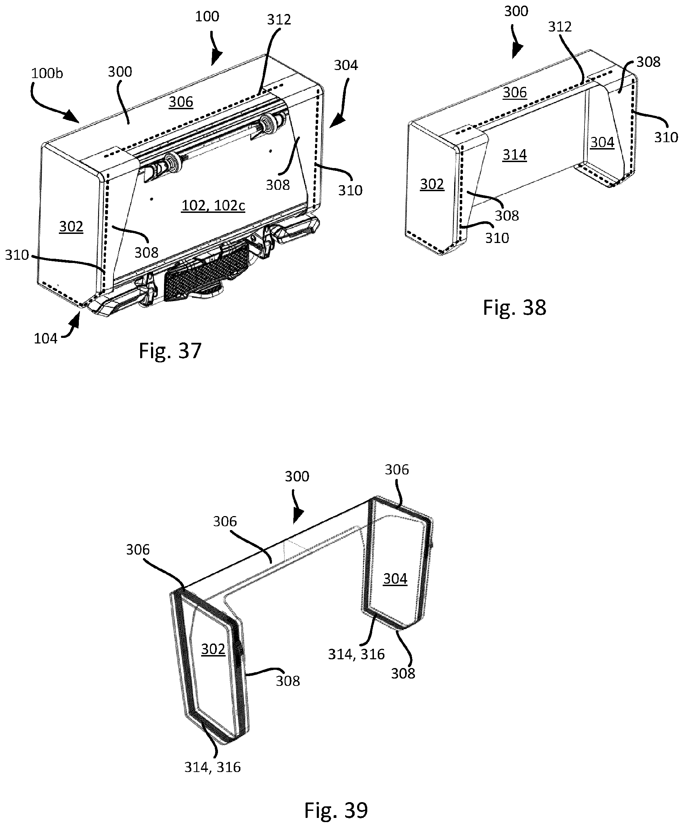

Turning now to Figures 37 and 38. Figure 37 shows a perspective rear view of a collapsible tent 100 in the collapsed state and being provided with a travel cover 300. Figure 38 shows a rear perspective view of a travel cover 300.

The travel cover 300 being configured to prevent water and debris from the road to enter the space S inside of the collapsible tent 100. Particularly for the embodiment disclosed herein in which the foldable base 102 forms a circumference when in the collapsed state, the travel cover 300 is configured to prevent water or debris from entering through lateral opposite lateral opening S1 and S2 (shown in Figure 20) into the space S.

The travel cover 300 is preferably made from a waterproof material, such a waterproof textile material or combination of a textile material and a water proof material backing. Accordingly, the travel cover 300 is preferably pliable and can be easily folded away for storage.

The travel cover 300 comprises oppositely arranged first and second lateral portions 302, 304 configured to cover corresponding said lateral openings S1, S2 to the space S. Each lateral portion 302, 304 is provided with a shape corresponding to the shape of the circumference of the foldable base 102 when in the collapsed / folded state. The lateral portions 302, 304 are preferably arranged to be threaded over the circumference of the foldable base 102, for instance by being provided with circumferential portions 308 extending around the circumference of the collapsed state thereof. The circumferential portions 308 extending laterally towards the center of the collapsible tent 100 when the travel cover 100 is attached thereto.

The travel cover 300 further comprises a connecting portion 306 connecting the first and second lateral portions 302, 304. The connecting portion 306 extends of the upper surface on the second side 100b of the collapsible tent 100, at least partially covering the fourth base section 102d.

The connecting portion 306 is connected to the respective first and second lateral portions 302, 304 around a portion of the length of the circumferential portion 308.

As is further shown in Figures 37 and 38, the connecting portion 308 may further comprises a front portion 314, configured to be arranged on the side of the collapsible tent 100 facing the vehicle V. Similarly, a the connecting portion 308 may comprise a rear portion (not shown) being oppositely arranged to the front portion 314.

The travel cover 300 may be configured to be attached to the collapsible tent 100 by means of at least two zip fasteners 310, 312. Each lateral portion 302, 304 may comprise a zip fastener 310 configured to engage with a corresponding zip fastener 310 on the collapsible tent. The zip fastener 310 on the collapsible tent 100 may be attached thereto by means of a keder arranged in a keder rail. The zip fastener 310 having a length with extension at least a portion of the circumference around the collapsible tent 100, specifically the foldable base 102 thereof, in the collapsed state. As illustrated in Figures 37 and 38, the zip fastener 310 may extend along the third base section 102c and along the angle section 104.

The connecting portion 306 may further comprise a connecting portion zip fastener 312 configured to engage with a corresponding connecting portion zip fastener 312 on the collapsible tent 100. The connecting portion zip fastener 312 is preferably attached to the collapsible tent 100 by means of a keder arranged in a keder rail. The connecting portion zip fastener 312 on the collapsible tent 100 being arranged on an upwards facing surface thereof, i.e. on the second side 100b thereof. As illustrated, the connecting portion zip fastener 312 may be arranged on the fourth base section 102d.

Figure 39 discloses a further embodiment of the travel cover 300. As illustrated in Figure 39, each circumferential portion 308 may comprise a travel cover tensioning element 314 configured to extend around the circumference of the collapsible tent 100, specifically the foldable base 102 thereof, in the collapsed state thereof. Each travel cover tensioning element 314 may be formed by a webbing strap and be arranged at least partially hidden in a slot in the material of each circumferential portion 308.

Each circumferential portion may further 308 comprise a travel cover sealing element 312 configured to extend around and abut against the circumference of the collapsible tent 100, specifically the foldable base 102 thereof, in the collapsed state thereof. The travel cover sealing element 312 may formed from an elastic sealing strip attached on the internal circumference of each circumferential portion 308.

Preferably, the travel cover sealing element 316 is arranged between the travel cover tensioning element 314 and the collapsible tent 100, specifically the foldable base 102 thereof.

It is to be understood that the present invention is not limited to the embodiments described above and illustrated in the drawings; rather, the skilled person will recognize that many changes and modifications may be made within the scope of the appended claims.

## Claims

1. A collapsible tent (100) configured to be mounted to the rear of a vehicle (V), the collapsible tent (100) being foldable between a use state and a collapsed state, the collapsible tent (100) comprising:
a foldable base (102) for forming a floor of the tent, the foldable base comprises at least a first base section (102a), a second base section (102b) and a third base section (102c),
wherein at least the first base section (102a) and the second base section (102b) are pivotable in relation to the adjacent base sections (102a, 102b, 102c) between the use state and the collapsed state of the collapsible tent (100), and
a foldable frame (108) for supporting a canopy (154) being configured to be folded with the folding of the foldable base (108), wherein the first base section (102a) of the foldable base (102) is configured to be arranged distally of the second base section (102b) and the third base section (102c) of the foldable base (102) in relation to a coupling arrangement (106) for mounting the collapsible tent (100) to a vehicle (100) when the collapsible tent (100) is in the use state, wherein,
the first base section (102a) is configured to be arranged intermediately of the second base section (102b) and the third base section (102c) when the collapsible tent (100) is in the collapsed state, **characterized in that**,
at least the first base section (102a) of the foldable base (102) is configured to be arranged inside a space (S) defined by a circumference formed by the remaining base sections (102b, 102c) of the foldable base (102) when the collapsible tent (100) is in the collapsed state.

2. The collapsible tent (100) according to claim 1, further comprising the coupling arrangement (106) being pivotable in relation to the foldable base (102), the coupling arrangement (106) being configured for connection and/or release of the collapsible tent (100) to and/or from the vehicle by a pivoting movement of the coupling arrangement (106) in relation to at least one of the base sections (102a, 102b, 102c).

3. The collapsible tent (100) according to any one the preceding claims, wherein the collapsible tent (100) further comprises an angle section (104) being arranged proximally of the third base section (102c) of the foldable base (102) in relation to the coupling arrangement (106), the third base section (102c) defining a base plane of the foldable base (102) when the collapsible tent (100) is in the use state and wherein the angle section (104) being arranged at an angle in relation to the third base section (102c).

4. The collapsible tent (100) according to any one of the preceding claims, wherein the collapsible tent (100) comprises a frame tensioning arrangement (158) configured to erect at least a proximal frame member (144) of the foldable frame (108), wherein the proximal frame member (144) is proximal in relation to the coupling arrangement (106).

5. The collapsible tent (100) according to claim 4 when dependent on claim 3, wherein the frame tensioning arrangement (158) comprises an elongate tensioning member (160) connected between the angle section (104) and at least a proximal frame member (144).

6. The collapsible tent (100) according to any one of the preceding claims, wherein a base pivot axis (A2, A3, A4), around which at least one of the at least two sections (102a, 102b, 102c) of the foldable base (102) folds, is arranged at an angle in relation to a longitudinal direction of the collapsible tent (100).

7. The collapsible tent (100) according to claim 6 when dependent on claim 2, wherein a coupling arrangement pivot axis (A1) around which the coupling arrangement (106) pivots is essentially parallel with the base pivot axis (A2, A3, A4).

8. The collapsible tent (100) according to claim 2, wherein the coupling arrangement (106) comprises a connector (170) configured to connect the coupling arrangement (106) to the vehicle in a pivoting movement of the coupling arrangement (106) and such that the relative orientation of the coupling arrangement (106) and the vehicle is fixed.

9. The collapsible tent (100) according to claim 8, wherein the connector (170) is a clamp connector (170) being configured to support the collapsible tent (100) on a tow ball (140a) of the vehicle (V) such that the orientation of the coupling arrangement (106) in relation to the tow ball (140a) is fixed.

10. The collapsible tent (100) according to claim 8, wherein the connector (170) comprises a releasable hitch adapter (178) being configured to support the collapsible tent (100) on a hitch receiver (140b) of the vehicle (V) such that the orientation of the coupling arrangement (106) in relation to the hitch receiver (140b) is fixed.

11. The collapsible tent (100) according to any one of the preceding claims, further comprising at least one support (146, 150) for supporting the collapsible tent (100) against a support surface, the at least one support (146, 150) being moveable between a raised and an extended position and wherein a first support portion (146a, 150a) of the at least one support (146, 150) is configured to be arranged such that it extends in parallel with the extension of the foldable base (102) when the collapsible tent (100) is in the use state and such that it extends below at least two adjacent base sections (102a, 102b, 102c) when the support (146, 150) is in the extended position.

12. The collapsible tent (100) according to claim 2, wherein the collapsible tent (100) in the collapsed state is configured to be pivoted between a raised and a lowered position in relation to the coupling arrangement (106) when the coupling arrangement (106) is connected to the vehicle (V).

## Patentansprüche

1. Zusammenklappbares Zelt (100), das konfiguriert ist, um an dem Heck eines Fahrzeugs (V) montiert zu werden, wobei das zusammenklappbare Zelt (100) zwischen einem Gebrauchszustand und einem zusammengeklappten Zustand faltbar ist, das zusammenklappbare Zelt (100) umfassend:
eine faltbare Basis (102) zum Ausbilden eines Zeltbodens, wobei die faltbare Basis mindestens einen ersten Basisabschnitt (102a), einen zweiten Basisabschnitt (102b) und einen dritten Basisabschnitt (102c) umfasst, wobei mindestens der erste Basisabschnitt (102a) und der zweite Basisabschnitt (102b) in Bezug auf die benachbarten Basisabschnitte (102a, 102b, 102c) zwischen dem Gebrauchszustand und dem zusammengeklappten Zustand des zusammenklappbaren Zelts (100) schwenkbar sind und
einen faltbaren Rahmen (108) zum Stützen eines Vordachs (154), das konfiguriert ist, um mit dem Falten der faltbaren Basis (108) gefaltet zu werden, wobei der erste Basisabschnitt (102a) der faltbaren Basis (102) konfiguriert ist, um von dem zweiten Basisabschnitt (102b) und dem dritten Basisabschnitt (102c) der faltbaren Basis (102) in Bezug auf eine Kopplungsanordnung (106) zum Montieren des zusammenklappbaren Zelts (100) an einem Fahrzeug (100) distal angeordnet zu sein, wenn sich das zusammenklappbare Zelt (100) in dem Gebrauchszustand befindet, wobei,
der erste Basisabschnitt (102a) konfiguriert ist, um von dem zweiten Basisabschnitt (102b) und dem dritten Basisabschnitt (102c) zwischenliegend angeordnet zu sein, wenn sich das zusammenklappbare Zelt (100) in dem zusammengeklappten Zustand befindet, **dadurch gekennzeichnet, dass**,
mindestens der erste Basisabschnitt (102a) der faltbaren Basis (102) konfiguriert ist, um innerhalb eines Raums (S) angeordnet zu sein, der durch einen Umfang definiert ist, der durch die verbleibenden Basisabschnitte (102b, 102c) der faltbaren Basis (102) ausgebildet wird, wenn sich das zusammenklappbare Zelt (100) in dem zusammengeklappten Zustand befindet.

2. Zusammenklappbares Zelt (100) nach Anspruch 1, ferner umfassend die Kopplungsanordnung (106), die in Bezug auf die faltbare Basis (102) schwenkbar ist, wobei die Kopplungsanordnung (106) für eine Verbindung und/oder ein Loslösen des zusammenklappbaren Zelts (100) mit und/oder von dem Fahrzeug durch eine Schwenkbewegung der Kopplungsanordnung (106) in Bezug auf mindestens einen der Basisabschnitte (102a, 102b, 102c) konfiguriert ist.

3. Zusammenklappbares Zelt (100) nach einem der vorstehenden Ansprüche, wobei das zusammenklappbare Zelt (100) ferner einen Winkelabschnitt (104) umfasst, der von dem dritten Basisabschnitt (102c) der faltbaren Basis (102) in Bezug auf die Kopplungsanordnung (106) proximal angeordnet ist, wobei der dritte Basisabschnitt (102c) eine Basisebene der faltbaren Basis (102) definiert, wenn sich das zusammenklappbare Zelt (100) in dem Gebrauchszustand befindet, und wobei der Winkelabschnitt (104) in einem Winkel in Bezug auf den dritten Basisabschnitt (102c) angeordnet ist.

4. Zusammenklappbares Zelt (100) nach einem der vorstehenden Ansprüche, wobei das zusammenklappbare Zelt (100) eine Rahmenspannanordnung (158) umfasst, die konfiguriert ist, um mindestens ein proximales Rahmenelement (144) des faltbaren Rahmens (108) zu errichten, wobei das proximale Rahmenelement (144) in Bezug auf die Kopplungsanordnung (106) proximal ist.

5. Zusammenklappbares Zelt (100) nach Anspruch 4, wenn abhängig von Anspruch 3, wobei die Rahmenspannanordnung (158) ein längliches Spannelement (160) umfasst, das zwischen dem Winkelabschnitt (104) und mindestens einem proximalen Rahmenelement (144) verbunden ist.

6. Zusammenklappbares Zelt (100) nach einem der vorstehenden Ansprüche, wobei eine Basisschwenkachse (A2, A3, A4), um die herum sich mindestens einer der mindestens zwei Abschnitte (102a, 102b, 102c) der faltbaren Basis (102) faltet, in einem Winkel in Bezug auf eine Längsrichtung des zusammenklappbaren Zelts (100) angeordnet ist.

7. Zusammenklappbares Zelt (100) nach Anspruch 6, wenn abhängig von Anspruch 2, wobei eine Kopplungsanordnungsschwenkachse (A1), um die herum die Kopplungsanordnung (106) schwenkt, im Wesentlichen parallel zu der Basisschwenkachse (A2, A3, A4) verläuft.

8. Zusammenklappbares Zelt (100) nach Anspruch 2, wobei die Kopplungsanordnung (106) einen Verbinder (170) umfasst, der konfiguriert ist, um die Kopplungsanordnung (106) in einer Schwenkbewegung der Kopplungsanordnung (106) derart mit dem Fahrzeug zu verbinden, dass die relative Orientierung der Kopplungsanordnung (106) und des Fahrzeugs festgelegt ist.

9. Zusammenklappbares Zelt (100) nach Anspruch 8, wobei der Verbinder (170) ein Klemmverbinder (170) ist, der konfiguriert ist, um das zusammenklappbare Zelt (100) auf einem Kugelkopf (140a) des Fahrzeugs (V) derart zu stützen, dass die Orientierung der Kopplungsanordnung (106) in Bezug auf den Kugelkopf (140a) festgelegt ist.

10. Zusammenklappbares Zelt (100) nach Anspruch 8, wobei der Verbinder (170) einen lösbaren Anhängervorrichtungsadapter (178) umfasst, der konfiguriert ist, um das zusammenklappbare Zelt (100) an einer Anhängervorrichtungsaufnahme (140b) des Fahrzeugs (V) derart zu stützen, dass die Orientierung der Kopplungsanordnung (106) in Bezug auf die Anhängervorrichtungsaufnahme (140b) festgelegt ist.

11. Zusammenklappbares Zelt (100) nach einem der vorstehenden Ansprüche, ferner umfassend mindestens eine Stütze (146, 150) zum Stützen des zusammenklappbaren Zelts (100) gegen eine Stützfläche, wobei die mindestens eine Stütze (146, 150) zwischen einer erhöhten und einer erweiterten Position bewegbar ist und wobei ein erster Stützabschnitt (146a, 150a) der mindestens einen Stütze (146, 150) konfiguriert ist, um derart angeordnet zu sein, dass er sich parallel zu der Erweiterung der faltbaren Basis (102) erstreckt, wenn sich das zusammenklappbare Zelt (100) in dem Gebrauchszustand befindet, und derart, dass er sich unter mindestens zwei benachbarten Basisabschnitten (102a, 102b, 102c) erstreckt, wenn sich die Stütze (146, 150) in der erweiterten Position befindet.

12. Zusammenklappbares Zelt (100) nach Anspruch 2, wobei das zusammenklappbare Zelt (100) in dem zusammengeklappten Zustand konfiguriert ist, um zwischen einer erhöhten und einer abgesenkten Position in Bezug auf die Kopplungsanordnung (106) geschwenkt zu werden, wenn die Kopplungsanordnung (106) mit dem Fahrzeug (V) verbunden ist.

## Revendications

1. Tente rabattable (100) conçue pour être montée à l'arrière d'un véhicule (V), la tente rabattable (100) pouvant être pliée entre un état d'utilisation et un état rabattu, la tente rabattable (100) comprenant :
une base pliable (102) destinée à former un plancher de la tente, la base pliable comprend au moins une première section de base (102a), une deuxième section de base (102b) et une troisième section de base (102c), dans laquelle au moins la première section de base (102a) et la deuxième section de base (102b) peuvent pivoter relativement aux sections de base (102a, 102b, 102c) adjacentes entre l'état d'utilisation et l'état rabattu de la tente rabattable (100), et
un cadre pliable (108) destiné à supporter une toile (154) étant conçue pour être pliée avec le pliage de la base pliable (108), dans laquelle la première section de base (102a) de la base pliable (102) est conçue pour être agencée de manière distale par rapport à la deuxième section de base (102b) et à la troisième section de base (102c) de la base pliable (102) relativement à un agencement d'accouplement (106) destiné au montage de la tente rabattable (100) sur un véhicule (100) lorsque la tente rabattable (100) est dans l'état d'utilisation, dans laquelle,
la première section de base (102a) est conçue pour être agencée de manière intermédiaire par rapport à la deuxième section de base (102b) et à la troisième section de base (102c) lorsque la tente rabattable (100) est à l'état rabattu, **caractérisée en ce que**,
au moins la première section de base (102a) de la base pliable (102) est conçue pour être agencée à l'intérieur d'un espace (S) défini par une circonférence formée par les sections de base (102b, 102c) restantes de la base pliable (102) lorsque la tente rabattable (100) est à l'état rabattu.

2. Tente rabattable (100) selon la revendication 1, comprenant en outre l'agencement d'accouplement (106) pouvant pivoter relativement à la base pliable (102), l'agencement d'accouplement (106) étant conçu pour la liaison et/ou la désolidarisation de la tente rabattable (100) au et/ou du véhicule par un mouvement de pivotement de l'agencement d'accouplement (106) relativement à au moins l'une des sections de base (102a, 102b, 102c).

3. Tente rabattable (100) selon l'une quelconque des revendications précédentes, dans laquelle la tente rabattable (100) comprend en outre une section angulaire (104) étant agencée de manière proximale par rapport à la troisième section de base (102c) de la base pliable (102) relativement à l'agencement d'accouplement (106), la troisième section de base (102c) définissant un plan de base de la base pliable (102) lorsque la tente rabattable (100) est dans l'état d'utilisation et dans laquelle la section angulaire (104) est agencée selon un angle relativement à la troisième section de base (102c).

4. Tente rabattable (100) selon l'une quelconque des revendications précédentes, dans laquelle la tente rabattable (100) comprend un agencement de tension de cadre (158) conçu pour ériger au moins un élément de cadre proximal (144) du cadre pliable (108), dans laquelle l'élément de cadre proximal (144) est proximal relativement à l'agencement d'accouplement (106).

5. Tente rabattable (100) selon la revendication 4 prise en dépendance de la revendication 3, dans laquelle l'agencement de tension de cadre (158) comprend un élément de tension allongé (160) relié entre la section angulaire (104) et au moins un élément de cadre proximal (144).

6. Tente rabattable (100) selon l'une quelconque des revendications précédentes, dans laquelle un axe de pivotement de base (A2, A3, A4), autour duquel au moins l'une des au moins deux sections (102a, 102b, 102c) de la base pliable (102) se plie, est agencé selon un angle relativement à une direction longitudinale de la tente rabattable (100).

7. Tente rabattable (100) selon la revendication 6 prise en dépendance de la revendication 2, dans laquelle un axe de pivotement d'agencement d'accouplement (A1) autour duquel l'agencement d'accouplement (106) pivote est essentiellement parallèle à l'axe de pivotement de base (A2, A3, A4).

8. Tente rabattable (100) selon la revendication 2, dans laquelle l'agencement d'accouplement (106) comprend un élément de liaison (170) conçu pour relier l'agencement d'accouplement (106) au véhicule dans un mouvement de pivotement de l'agencement d'accouplement (106) et de telle sorte que l'orientation relative de l'agencement d'accouplement (106) et du véhicule est fixe.

9. Tente rabattable (100) selon la revendication 8, dans laquelle l'élément de liaison (170) est un élément de liaison à serrage (170) étant conçu pour supporter la tente rabattable (100) sur une rotule de traction (140a) du véhicule (V) de telle sorte que l'orientation de l'agencement d'accouplement (106) relativement à la rotule de traction (140a) est fixe.

10. Tente rabattable (100) selon la revendication 8, dans laquelle l'élément de liaison (170) comprend un adaptateur d'attelage désolidarisable (178) étant conçu pour supporter la tente rabattable (100) sur un récepteur d'attelage (140b) du véhicule (V) de telle sorte que l'orientation de l'agencement d'accouplement (106) relativement au récepteur d'attelage (140b) est fixe.

11. Tente rabattable (100) selon l'une quelconque des revendications précédentes, comprenant en outre au moins un support (146, 150) destiné à supporter la tente rabattable (100) contre une surface de support, l'au moins un support (146, 150) étant mobile entre une position relevée et une position déployée et dans laquelle une première partie de support (146a, 150a) de l'au moins un support (146, 150) est conçue pour être agencée de telle sorte qu'elle se déploie en parallèle du déploiement de la base pliable (102) lorsque la tente rabattable (100) est dans l'état d'utilisation et de telle sorte qu'elle se déploie en-dessous d'au moins deux sections de base (102a, 102b, 102c) adjacentes lorsque le support (146, 150) est dans la position déployée.

12. Tente rabattable (100) selon la revendication 2, dans laquelle la tente rabattable (100) dans l'état rabattu est conçue pour être pivotée entre une position relevée et une position abaissée relativement à l'agencement d'accouplement (106) lorsque l'agencement d'accouplement (106) est relié au véhicule (V).
